(19) **Europäisches Patentamt**

**European Patent Office**

**Office européen des brevets**

(11) Veröffentlichungsnummer: **0 361 187 B1**

(12) **EUROPÄISCHE PATENTSCHRIFT**

(45) Veröffentlichungstag der Patentschrift: **16.12.92**

(51) Int. Cl.⁵: **B29C 47/06**, B29C 49/22

(21) Anmeldenummer: **89116749.6**

(22) Anmeldetag: **11.09.89**

(54) Verfahren und Vorrichtung zum Herstellen von Hohlkörpern aus thermoplastischem Kunststoff.

(30) Priorität: **20.09.88 DE 3831836**

(43) Veröffentlichungstag der Anmeldung:
**04.04.90 Patentblatt 90/14**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
EP-A- 0 249 866     WO-A-88/02689
DE-A- 2 050 563     DE-A- 2 161 356
DE-A- 3 026 822     FR-A- 2 354 188
US-A- 3 457 337     US-A- 3 706 827
US-A- 4 208 178     US-A- 4 548 569

PATENT ABSTRACTS OF JAPAN, Band 10,
Nr. 378 (M-546)[2435], 17. Dezember 1986,
Seite 123 M 316; & JP-A-61 171 320 (MAZDA
MOTOR CORP.) 02-08-1986

PATENT ABSTRACTS OF JAPAN, Band 10,
Nr. 33 (M-452)[2090], 8. Februar 1986; & JP-
A-60 187 513 (MITSUBISHI JUSHI K.K.)
25-09-1985

(73) Patentinhaber: **Krupp Kautex Maschinenbau
GmbH**

**W-5300 Bonn 3(DE)**

(72) Erfinder: **Daubenbüchel, Werner, Dipl.-Ing.
Juckerberg 1
W-5060 Bergisch-Gladbach 4(DE)**
Erfinder: **Eiselen, Otto, Dipl.-Ing.
Am Wiesenplätzchen 8
W-5330 Königswinter 41(DE)**
Erfinder: **Friedrichs, Karsten, Dipl.-Ing.
Kastanienweg 39
W-5340 Bad Honnef(DE)**
Erfinder: **Kiefer, Erich, Dipl.-Ing.
Siebengebirgsstrasse 30
W-5300 Bonn 3(DE)**
Erfinder: **Klüsener, Peter, Dipl.-Ing.
Im Vogelsang 7
W-5300 Bonn 2(DE)**

(74) Vertreter: **Koepsell, Helmut, Dipl.-Ing.
Mittelstrasse 7
W-5000 Köln 1(DE)**

## Beschreibung

Die Erfindung betrifft ein Verfahren und eine Vorrichtung zum Herstellen von Hohlkörpern aus thermoplastischem Kunststoff, deren Wandung aus einem wenigstens zwei Schichten aufweisenden Laminat besteht, mittels Extrusionsblasformen, bei welchem Verfahren zunächst Vorformlinge, deren Wandung eine entsprechende Anzahl von Schichten aufweist, absatzweise hergestellt werden unter Verwendung einer Extrusionseinheit, die wenigstens zwei kontinuierlich laufende Extruder und einen gemeinsamen Extrusionskopf aufweist, wobei die Extrusionseinheit mit einem Speicherraum zum Speichern von in den Extrudern plastifizierten Materialien und mit zwischen zwei Endpositionen hubartig hin- und herbewegbaren Mitteln zum Entleeren dieses Speicherraumes zur Bildung eines Vorformlings versehen ist und Materialströme, deren Anzahl der Anzahl der Schichten in der Wandung des Hohlkörpers entspricht, im Bereich des Extrusionskopfes derart zusammengeführt werden, daß einander benachbarte Materialströme in einem Laminatbildungsbereich miteinander zu einem Laminat für die Wandung des Vorformlings verbunden werden, welches Laminat durch einer Verbindungskanal innerhalb des Extrusionskopfes zu der in einem Abstand vom Speicherraum befindlichen Austrittsöffnung vorbewegt wird, und aus der Austrittsöffnung ein Gesamt-Volumenabschnitt des Laminats zur Bildung des Vorformlings ausgestoßen wird, der zwei Volumen-Endabschnitte und einen Volumen-Mittelabschnitt aufweist, wobei zumindest ein Teilbereich des Volumen-Mittelabschnittes innerhalb des Formnestes einer unterteilten Blasform unter innerem Überdruck aufgeweitet wird und die Endabschnitte des Volumen-Gesamtabschnittes als Überschußmaterial durch einen Abquetschvorgang abgequetscht werden, an welchem Blasformteile teilnehmen, und das Überschußmaterial außerhalb des Formnestes verbleibt.

Es ist aus der DE-OS 36 35 334 bekannt, zunächst die einzelnen Materialströme innerhalb des Ringkolbens des Extrusionskopfes in eine im Querschnitt ringförmige Gestalt zu bringen und die Materialströme dann innerhalb des Ringkolbens zum Laminat zusammenzuführen und dieses Laminat durch einen Ringkanal in den Speicherraum zu leiten, so daß die Kunststoffmaterialien zur Herstellung des Vorformlinges bereits in Laminatform gespeichert werden und beim darauffolgenden Entleerungshub durch den Ringkolben das bereits gebildete Laminat in Richtung auf die Austrittsöffnung verdrängt wird.

Die DE-OS 36 20 144 offenbart einen Extrusionskopf, bei welchem die von den Extrudern kommenden Materialströme durch Ringkanäle, die in einem stationär angeordneten Bauteil des Extrusionskopfes vorgesehen sind, zu einem Laminatbildungsbereich geführt werden, von welchem das aus den Materialströmen entstandene Laminat durch einen Ringkanal in den Speicherraum geführt wird, der durch eine Ringkolben-Einheit entleerbar ist.

Aufgrund der absatzweisen Bildung des Vorformlings in Abhängigkeit von den Hubbewegungen des den Speicherraum entleerenden Ringkolbens können innerhalb des Extrusionskopfes zwei Betriebsphasen unterschieden werden. Nach Abschluß der Herstellung eines Vorformlings durch Ausstoßen einer entsprechenden Menge an Laminat durch die Austrittsöffnung des Extrusionskopfes ist der Speicherraum entleert. Dabei nimmt der Ringkolben seine Endposition am Ende des Entleerungsvorganges ein. In der folgenden Betriebsphase wird der Speicherraum mit Laminat gefüllt, dessen Schichten von den zugeordneten Plastifiziereinrichtungen, also den bereits erwähnten Extrudern, in den Extrusionskopf gefördert werden. Dabei wird der Ringkolben, der für die Entleerung des Speicherraumes benutzt wird, in seine zweite Endposition verschoben, die dem Ende des Füllvorganges entspricht. Während dieser Betriebsphase wird kein Vorformling aus dem Extrusionskopf ausgestoßen, so daß das laminatförmige Material, welches sich im Kanalsystem zwischen Speicherraum und der Austrittsöffnung befindet, nicht bewegt wird. Nachdem das Füllen des Speicherraumes beendet worden ist, folgt die andere Betriebsphase, in welcher das zuvor gebildete Laminat zur Herstellung eines Vorformlings aus dem Speicherraum unter Einwirkung des Ringkolbens ausgestoßen und in Richtung auf die Austrittsöffnung verdrängt wird. Dabei fließt das Laminat durch einen Verbindungskanal in Richtung auf die Austrittsöffnung. Während dieser zweiten Betriebsphase wird der Ausstoßvorgang, durch welchen der Vorformling gebildet wird, überwiegend durch die Verdrängung des Materials aus dem Speicherraum durch den Ringkolben bewirkt. Allerdings kommt ein kleinerer Materialanteil hinzu, der bei kontinuierlich laufenden Plastifiziereinrichtungen von diesen während des Ausstoßhubes in den Extrusionskopf gefördert wird mit der Folge, daß dadurch ein gewisser Materialanteil zusätzlich zu der durch den Ringkolben bewirkten Verdrängung des Materials in Richtung auf die Austrittsöffnung verdrängt wird. Der ununterbrochene Betrieb der die Materialien für die Schichten des Laminats plastifizierenden Extruder ist erwünscht, damit sich die Betriebszustände an der Laminatbildungsstelle stabilisieren können. Dies ist erforderlich, damit die einzelnen Schichten ihre jeweils gewünschte Dicke erhalten und somit die Dickenverteilung der Schichten im Laminat eingehalten werden kann.

Die absatzweise, also diskontinuierliche Herstellung der Vorformlinge hat entsprechend den unterschiedlichen Betriebsphasen unterschiedliche Betriebsbedingungen, insbesondere bezüglich der im Extrusionskopf herrschenden Druckverhältnisse, zur Folge. Diese unterschiedlichen und demzufolge sich ändernden Druckverhältnisse führen dazu, daß am Beginn, ggf. auch am Ende jedes Entleerungshubes und am Anfang jedes Füllhubes auch im Laminatbildungsbereich in den einzelnen Materialströmen, aus denen sich das Laminat zusammensetzt, unterschiedliche Druckverhältnisse herrschen, die Unregelmäßigkeiten in der Laminatbildung bewirken können. Dies ist z. B. darauf zurückzuführen, daß normalerweise die Volumen der einzelnen Schichten und damit auch der einzelnen Kanalsysteme, durch die die noch getrennten Materialströme zum Laminatbildungsbereich fließen, unterschiedlich sind. Da thermoplastische Kunststoffe in plastischem Zustand sich nicht wie eine Flüssigkeit verhalten, sondern innerhalb bestimmter Grenzen eine elastische Komprimierbarkeit aufweisen, die bei Druckentlastung zu einer Rückstellung, also zu einer Volumenvergrößerung des Kunststoffes führt, muß damit gerechnet werden, daß am Anfang, ggf. auch am Ende jedes Entleerungshubes und ggf. auch am Anfang jedes Füllhubes in dem Bereich, in welchem das Laminat sich bildet, durch unterschiedliches Komprimieren und Dekomprimieren der einzelnen Materialströme für das Laminat diese Verformungen erfahren, die zu einer unregelmäßigen Struktur, insbesondere bezüglich der räumlichen und quantitativen Verteilung der einzelnen Schichten im Laminat führen. Diese Ungleichmäßigkeiten bleiben auf die erste Phase des Entleerungshubes beschränkt, da sich nach Beginn des Entleerungshubes wieder ein Gleichgewicht im System einstellen wird. Entsprechendes kann auch für die Endphase des Entleerungshubes und für die Anfangsphase des Füllhubes gelten, wobei diese beiden Phasen möglicherweise ineinander übergehen derart, daß die Druckentlastung bereits kurz vor Beendigung des Entleerungshubes beginnt, so daß sich ein Druckgleichgewicht erst nach Beginn des Füllhubes wieder einstellt. Jedenfalls kann die Druckentlastung ein Dekomprimieren des Materials zur Folge haben, das in den einzelnen Materialströmen aufgrund der unterschiedlichen Volumen und unterschiedlicher Eigenschaften der die einzelnen Materialströme bildenden Materialien unterschiedlich sein wird, so daß im Bereich der Laminatbildungsstelle in den einzelnen Materialströmen Unregelmäßigkeiten der Verteilung der einzelnen Schichten im Laminat auftreten können. Diese Unregelmäßigkeiten sind bei kontinuierlicher Extrusion der Vorformlinge zumindest nicht in dieser Weise vorhanden, da keine durch absatzweise Bildung der Vorformlinge bewirkten Änderungen der Druckverhältnisse auftreten.

Die vorbeschriebenen Unregelmäßigkeiten können zu erheblichen Qualitätsminderungen der aus den Vorformlingen herzustellenden Hohlkörper dadurch führen, daß deren Wandungen von ungleichmäßiger Beschaffenheit sind. Dabei ist es gleichgültig, wie im einzelnen die Materialströme vor der Laminatbildung im Extrusionskopf geführt werden, da die die Unregelmäßigkeiten bewirkenden Änderungen der Druckverhältnisse in jedem Fall durch den Wechsel zwischen Füllen und Entleeren auftreten, der für das absatzweise Herstellen der Vorformlinge typisch ist.

Demzufolge liegt der Erfindung unter anderem die Aufgabe zugrunde, Verfahren und Vorrichtung der einleitend beschriebenen Art so auszugestalten, daß eine nachteilige Beeinflussung der Qualität der aus den Vorformlingen hergestellten Hohlkörper durch die vorstehend erläuterten betrieblichen Gegebenheiten nicht eintritt. Dies soll mit einfachen Mitteln auch dann erreichbar sein wenn die Hohlkörper, wie es im Extrusionsblasverfahren im allgemeinen üblich ist, in großen Stückzahlen hergestellt werden. In jedem Fall soll vermieden werden, daß die Unregelmäßigkeiten, die am Anfang und/oder am Ende des Entleerungshubes und ggf. am Anfang des Füllhubes sich im Laminat bilden können, die Qualität des Enderzeugnisses beeinflussen.

Zur Lösung dieser Aufgabe schlägt die Erfindung vor, daß das Laminat nach seiner Bildung in dem Speicherraum gespeichert wird und das Volumen des Verbindungskanals zwischen Laminatbildungsbereich und Austrittsöffnung zu dem Zeitpunkt, zu welchem die Mittel zum Entleeren des Speicherraums ihre Position am Ende des Entleerungshubes einnehmen, so bemessen wird, daß bei einem vorgegebenen Volumen des einen Vorformling bildenden Volumen-Gesamtabschnittes das Material zur Herstellung eines Hohlkörpers nach Verlassen des Speicherraums während der Dauer wenigstens eines Arbeitszyklus' noch im Extrusionskopf verbleibt und ein Volumen-Abschnitt zumindest teilweise gestörten Laminats, der am Ende des Entleerungshubes und/oder am Anfang des Füllhubes und am Anfang des Entleerungshubes der Mittel zum Entleeren des Speicherraums nahe dem Laminatbildungsbereich einschließlich des während des Entleerungshubes in den Speicherraum hinein extrudierten Materials entsteht, sich in wenigstens einem der Volumen-Endabschnitte befindet, die von dem den extrudierten Vorformling bildenden Volumen-Gesamtabschnitt abgequetscht werden und außerhalb des Formnestes der Blasform bleiben, wenn wenigstens ein Teilbereich des Volumen-Mittelabschnittes im Formnest der Blasform aufgeweitet wird.

Das Verfahren gemäß der Erfindung weist den besonderen Vorteil auf, daß es zur Erzielung des angestrebten Effektes zumindest in den meisten Fällen keinerlei zusätzlichen Aufwandes an Kunststoff bedarf. Beim Extrusionsblasverfahren ist es ohnehin erforderlich, einen Vorformling zu verwenden, der länger ist als der daraus herzustellende Hohlkörper. Das überschüssige Material wird im allgemeinen beim Schließen der geteilten Blasform um den Vorformling durch die zu diesem Zweck mit Abquetschkanten versehene Blasform und/oder im Zusammenwirken zwischen Blasform und Blasdorn abgequetscht, so daß an beiden Enden des Hohlkörpers sich Abschnitte aus Abfall- oder Überschußmaterial befinden, die im allgemeinen über einen dünnen Steg mit dem Hohlkörper verbunden bleiben und von diesem abgetrennt werden. Diese Abfallstücke an beiden Enden des Hohlkörpers weisen verfahrensbedingt eine gewisse Mindestlänge auf, so daß der mit der herstellungsbedingten Unregelmäßigkeit versehene Abschnitt des Vorformlings ohne Schwierigkeiten auch dann in wenigstens einem dieser Abfallstücke untergebracht werden kann, wenn der Laminatabschnitt mit gestörter Struktur und/oder ein zwischen zwei benachbarten Laminatabschnitten mit gestörter Struktur befindlicher Laminatabschnitt mit ungestörter Struktur, der ebenfalls in wenigstens einem der Abfallteile plaziert werden muß, eine axiale Erstreckung aufweisen, die nicht extrem kurz ist.

Vorteilhaft wird so verfahren, daß das Volumen des Verbindungskanals zwischen dem Laminatbildungsbereich und der Austrittsöffnung zu dem Zeitpunkt, zu welchem die Mittel zum Entleeren des Speicherraums ihre Position am Ende des Entleerungshubes einnehmen,

a) nicht kleiner ist als die Summe des Volumens aus dem Volumen-Mittelabschnitt und dem in Fließrichtung des Materials vorderen Volumen-Endabschnitt und dem Volumen-Abschnitt, der während des Entleerungshubes aus der Extrudern in den Extrusionskopf hineingefördert wird, und

b) nicht größer ist als die Summe des Volumens aus dem einen Vorformling bildenden Volumen-Gesamtabschnitt und dem in Fließrichtung des Materials vorderen Volumen-Endabschnitt abzüglich des Volumen-Unterabschnitts gestörten Laminats, der zu Beginn des Füllhubes entsteht, wobei

c) die Summe der Volumen des Volumen-Abschnitts, der während des Entleerungshubes aus den Extrudern in den Extrusionskopf hineingefördert wird, und des Volumen-Unterabschnitts gestörten Laminats, der zu Beginn des Füllhubes entsteht, nicht größer ist als die Summe der Volumen beider Volumen-Endabschnitte des Volumen-Gesamtabschnitts eines Vorformlings.

Dabei kann so verfahren werden, daß das Volumen des Verbindungskanals zwischen Laminatbildungsbereich und der Austrittsöffnung zu dem Zeitpunkt, zu welchem die Mittel zum Entleeren des Speicherraums ihre Position am Ende des Entleerungshubes einnehmen, so bemessen wird, daß es gleich dem Volumen eines Vorformlings ist.

Es ist auch möglich, daß das Volumen des Verbindungskanals zwischen Laminatbildungsbereich und der Austrittsöffnung zu dem Zeitpunkt, zu welchem die Mittel zum Entleeren des Speicherraums ihre Position am Ende des Entleerungshubes einnehmen, so bemesen wird, daß es den Bedingungen gemäß den Merkmalen a) und b) des Anspruches 2 entspricht zuzüglich dem Volumen eines volumen-Gesamtabschnittes oder einem ganzzahligen Vielfachen des Volumens für einen Vorformling. Als besonders vorteilhaft hat sich eine Verfahrensführung herausgestellt, bei welcher der gesamte Volumen-Abschnitt, der gestörte Laminatbereiche aufweist, ggf. unter Einschluß zwischen gestörten Laminatbereichen befindlichen Volumen-Unterabschnitten mit ungestörter Struktur, auf zwei benachbarte Volumen-Endabschnitte zweier aufeinanderfolgend ausgestoßener Vorformlinge verteilt wird, so daß der eine Volumen-Teilabschnitt des Volumen-Abschnittes mit gestörten Laminatbereichen sich im Volumen-Endabschnitt an einem Ende eines Vorformlings und der zweite Volumen-Teilabschnitt mit gestörten Laminatbereichen sich im Volumen-Endabschnitt am entsprechend anderen Ende des im folgenden Arbeitszyklus hergestellten Vorformlings befindet. Es ist aber auch eine Verfahrensführung möglich, bei welcher der gesamte Volumen-Abschnitt zumindest teilweise gestörten Laminats sich nur in einem Volumen-Endabschnitt eines Vorformlings befindet.

Gemäß einem weiteren Vorschlag der Erfindung können die Materialien für die das Laminat bildenden Schichten durch die Mittel zum Entleeren des Speicherraums hindurch in den Speicherraum fließen, wobei der Laminatbildungsbereich sich während des Füllhubes und während des Entleerungshubes innerhalb des Extrusionskopfes entsprechend den Bewegungen der Mittel zum Entleeren des Speicherraums hin- und herbewegt. Bei anderer Zuführung der Materialien für die das Laminat bildenden Schichten kann der Laminatbildungsbereich auch stationär angeordnet sein.

Die Erfindung betrifft weiterhin eine Vorrichtung zum Herstellen von Hohlkörpern aus thermoplastischem Kunststoff, deren Wandung aus einem wenigstens zwei Schichten aufweisenden Laminat besteht, durch Extrusionsblasformen mit einer Extrusionseinheit, die wenigstens zwei Extruder und einen gemeinsamen Extrusionskopf mit einer ringförmigen Austrittsöffnung aufweist, wobei die Extrusionseinheit mit einem Speicherraum zum Speichern des in den Extrudern plastifizierten Materials und mit zwischen zwei Endpositionen hubartig hin- und herbewegbaren Mitteln zum Entleeren des Speicherraumes zur Bildung eines Vorformlings versehen ist und die Vorrichtung wenigstens eine geteilte, mit Abquetschkanten versehene Blasform mit wenigstens einem Formnest aufweist, innerhalb dessen zumindest ein Teilbereich des Mittelabschnittes des Vorformlings unter innerem Überdruck zum Hohlkörper aufgeweitet wird, und an beiden Enden des Mittelabschnitts jeweils ein Endabschnitt als Überschußmaterial abgequetscht wird und innerhalb des Extrusionskopfes wenigstens ein Laminatbildungsbereich vorhanden ist, in welchem die Materialströme für die einzelnen Schichten zur Bildung des Laminats miteinander verbunden werden, und der Laminatbildungsbereich über einen Verbindungskanal, durch welchen das Laminat in Richtung auf die Austrittsöffnung fließt, mit letzterem verbunden ist. Eine derartige Vorrichtung ist dadurch gekennzeichnet, daß das Volumen des Verbindungskanals zwischen dem Bildungsbereich des Laminats, das nach seiner Bildung in dem Speicherraum gespeichert wird, und der Austrittsöffnung zu dem Zeitpunkt, zu welchem die Mittel zum Entleeren des Speicherraums ihre Position am Ende des Entleerungshubes einnehmen, so bemessen ist, daß bei einem vorgegebenen Volumen des einen Vorformling bildenden Volumen-Gesamtabschnittes das Material zur Herstellung eines Hohlkörpers nach Verlassen des Speicherraums während der Dauer wenigstens eines Arbeitszyklus' noch im Extrusionskopf verbleibt und ein Volumen-Abschnitt zumindest teilweise gestörten Laminats, der am Ende des Entleerungshubes und/oder am Anfang des Füllhubes und am Anfang des Entleerungshubes der Mittel zum Entleeren des Speicherraums nahe dem Laminatbildungsbereich einschließlich des während des Entleerungshubes in den Extrusionskopf hinein extrudierten Materials entsteht, in wenigstens einem der Volumen-Endabschnitte positioniert ist, die von dem den extrudierten Vorformling bildenden Volumen-Gesamtabschnitt abgequetscht werden und außerhalb des Formnestes der Blasform positioniert sind, wenn wenigstens ein Teilbereich des Volumen-Mittelabschnittes im Formnest der Blasform aufgeweitet wird.

Als besonders zweckmäßig hat es sich herausgestellt, das Volumen des Verbindungskanals zwischen dem Laminatbildungsbereich und der Austrittsöffnung zu dem Zeitpunkt, zu welchem die Mittel zum Entleeren des Speicherraums ihre Position am Ende des Entleerungshubes einnehmen, so zu wählen, daß es folgenden Bedingungen genügt:

$$Vk \geq n \cdot Vp - Vb + Ve \text{ und}$$
$$Vk \leq n \cdot Vp + Vc - Vve,$$

wobei n = 1 oder ein ganzzahliges Vielfaches von 1,

Vp der den Vorformling bildende Volumen-Gesamtabschnitt,

Vb der in Fließrichtung des Laminats hintere abzuquetschende Volumen-Endabschnitt,

Vc der in Fließrichtung des Laminats vordere abzuquetschende Volumen-Endabschnitt,

Ve der während des Entleerens des Speicherraumes bei kontinuierlich arbeitenden Extrudern von diesen in den Extrusionskopf geförderte Volumenanteile und

Vve der in Fließrichtung des Laminats hintere Volumen-Teilabschnitt gestörten Laminats, der nach Beginn des Füllhubes gebildet wird,

ist und die zusätzliche Bedingung gilt, daß

$$Vv = Ve + Vve \leq Vb + Vc.$$

Wenn die vorstehenden Bedingungen eingehalten werden, ist in jedem Fall eine Gewähr dafür gegeben, daß sich die Bereiche gestörten Laminats nicht in dem Volumen-Mittelabschnitt des den Vorformling bildenden Volumen-Gesamtabschnitts befinden, aus welchem der herzustellende Hohlkörper, also das Fertigerzeugnis, geformt wird.

Um die Vorrichtung ohne Schwierigkeiten für die Herstellung unterschiedlicher Hohlkörper verwendbar zu machen, schlägt die Erfindung weiterhin vor, daß das Volumen des Verbindungskanals innerhalb eines bestimmten Bereiches stufenlos verändert werden kann. Eine Änderung des Volumens wird im allgemeinen dann notwendig sein, wenn das Gewicht des herzustellenden Hohlkörpers geändert oder die Extrusionseinheit von der Herstellung einer Hohlkörperart auf die Herstellung einer anderen Hohlkörperart umgestellt werden muß. Die Anpassung des Volumens des Verbindungskanals an das jeweilige Volumen des Vorformlings kann in besonders einfacher Weise dadurch bewirkt werden, daß die Mittel zum Entleeren des Speicherraums als wenigstens ein Ringkolben ausgebildet sind und die Lage der von diesem Ringkolben ausgeführten Hübe zum Füllen und Entleeren des Speicherraums relativ zur Austrittsöffnung so gewählt ist, daß das Volumen des Verbindungskanals den vorgenannten Bedingungen genügt.

In der Zeichnung sind einige derzeit bevorzugte Ausführungsbeispiele der Erfindung dargestellt. Es zeigen:

| | |
|---|---|
| Fig. 1 | einen Längsschnitt durch einen Extrusionskopf mit darunter angeordneter Blasform in perspektivischer Ansicht, |
| Fig. 2 | eine der Fig. 1 entsprechende Ansicht mit der Blasform in Offenstellung, |
| Fig. 3 | die dazugehörige Seitenansicht, |
| Fig. 4 a-d | im Schema einen Schnitt durch |

Fig. 5 die grafische Darstellung eines Arbeitszyklus' und eines dabei hergestellten Vorformlings,

Fig. 6a und

Fig. 6b einen Ausschnitt aus einem Extrusionskopf in größerem Maßstab mit der Stellung der Teile am Ende von zwei aufeinanderfolgenden Arbeitszyklen,

Fig. 7a bis

Fig. 7d die grafische Darstellung der Positionierung der Bereiche gestörten Laminats im Vorformling in Abhängigkeit vom Volumen des Verbindungskanals,

Fig. 8 einen Ausschnitt aus Fig. 7d in größerem Maßstab, der den Aufbau eines bestimmten Abschnittes des Vorformlings zeigt,

Fig. 9a und

Fig. 9b jeweils eine der Fig. 4a entsprechende Darstellung zweier Ausführungsformen mit unterschiedlichen Volumen der Verbindungskanäle,

Fig. 10 eine zweite Ausführungsform eines Extrusionskopfes,

Fig. 11 eine dritte Ausführungsform eines Extrusionskopfes.

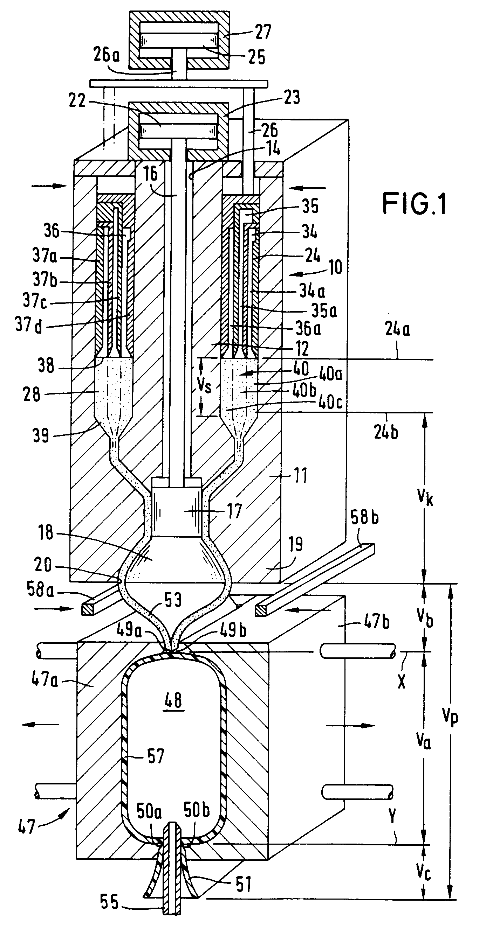

Der Extrusionskopf 10 des Ausführungsbeispiels gemäß den Fig. 1 - 9 weist ein Gehäuse 11 auf, innerhalb dessen in einem Abstand zum Gehäuse 11 koaxial ein Kern 12 angeordnet ist, welcher mit einer axialen Bohrung 14 versehen ist. Die Bohrung 14 dient zur Aufnahme einer darin in Längsrichtung des Extrusionskopfes 10 hin- und herbewegbaren Stange 16, die an ihrem einen Ende ein Führungsteil 17 trägt. An letzterem ist ein Düsenkern 18 angebracht, der gemeinsam mit dem ihn umgebenden Bereich 19 des Gehäuses 10 eine Austrittsöffnung 20 begrenzt. Die Stange 16 ist an ihrem der Austrittsöffnung 20 abgekehrten Ende mit dem Kolben 22 eines hydraulischen Zylinders 23 verbunden. Durch entsprechende Beaufschlagung des Kolbens 22 kann der Düsenkern 18 axial nach oben und unten zur Beeinflussung der Breite der ringförmigen Extrusionsöffnung 20 verschoben werden. Dies wird in der üblichen Weise dadurch ermöglicht, daß die einander gegenüberliegenden Flächen des Düsenkerns 18 und der ihn umgebenden Bereiche des Gehäuses 19, die als besonderer Düsenring ausgebildet sein können, konisch verlaufen.

Innerhalb des Extrusionskopfes 10 ist ein zum Kern 12 koaxialer, im Querschnitt ringförmiger Speicherraum 28 vorgesehen, dem ein axial hin- und herverschiebbarer Ringkolben 24 zugeordnet ist. Der Ringkolben 24 ist an seinem der Austrittsöffnung 20 abgekehrten Ende über Kolbenstangen 26, 26a mit dem Kolben 25 verbunden, der in einem hydraulischen Zylinder 27 geführt ist. Es können auch mehrere Kolben-Zylinder-Anordnungen 25, 27 vorgesehen sein.

Der Extrusionskopf ist mit drei in der Zeichnung nicht dargestellten Extrudern verbunden, aus denen jeweils ein thermoplastisches Kunststoffmaterial oder ein anderes Material mit gleichen Eigenschaften bezüglich der Verarbeitbarkeit in den Extrusionskopf 10 gefördert wird. Diese Extruder sind in geigneter Weise mit innerhalb des Ringkolbens 24 angeordneten Kanalsystemen verbunden. Wie im einzelnen die Verbindung zwischen den Extrudern und dem Extrusionskopf erfolgt, ist nicht Gegenstand der Erfindung. So ist beispielsweise eine Verbindung zwischen den Austrittsöffnungen der Extruder und den innerhalb des Ringkolbens 24 angeordneten Kanalsystemen in der DE-OS 36 35 334 beschriebenen Weise möglich. Andere Möglichkeiten der Verbindung sind z. B. in der DE-AS 21 61 356, in der DE-PS 26 39 665 und in der DE-PS 30 26 822 offenbart.

Jeder der von den Extrudern kommenden Materialströme gelangt innerhalb des Kolbens 24 jeweils in einen ringförmigen Verteilerkanal 34, 35, 36, von denen jeder in einer zur Längsachse des Extrusionskopfes 10 senkrechten Ebene umläuft. Diese Verteilerkanäle 34, 35, 36 können aus Platzgründen innerhalb des Ringkolbens 24 in Richtung der Langsachse desselben etwas gegeneinander versetzt angeordnet sein. In den Verteilerkanälen 34, 35, 36 wird der vom jeweiligen Extruder in Form eines geschlossenen Stranges zugeführte Materialstrom zu einem im Querschnitt ringförmigen Materialstrom umgeformt.

An jeden der Verteilerkanäle 34, 35, 36 schließt sich jeweils ein Ringkanal 34a, 35a, 36a an. Diese Ringkanäle 34a, 35a, 36a münden am stirnseitigen Ende 38 des Ringkolbens 24 in den Speicherraum 28 bzw. bei in der unteren Endlage 24b befindlichem Ringkolben 24 in den an den Speicherraum anschließenden Verbindungskanal 39, der den Speicherraum 28 mit der ringförmigen Austrittsöffnung 20 verbindet. Der Einfachheit halber wird im folgenden lediglich davon gesprochen, daß die Ringkanäle 34a, 35a, 36a in den Speicherraum 28 münden, da dies in sämtlichen Positionen des Ringkolbens 24 mit Ausnahme der der Austrittsöffnung 20 zugekehrten Endposition der Fall ist.

Die der Austrittsöffnung 20 zugekehrten Endabschnitte der Ringkanäle 34a, 35a, 36a sind in Strömungsrichtung des durch die einzelnen Kanalsystem fliessenden Kunststoffes konisch sich erweiternd ausgebildet, wobei die die Ringkanäle 34a, 35a, 36b begrenzenden Trennwände 37a, 37b, 37c, 37d des Ringkolbens 24 in Strömungsrichtung eine entsprechende Verringerung ihrer Dicke erfahren. Dies dient einmal dazu, die Geschwindigkeit der einzelnen Materialströme in diesen konisch sich erweiternden Endabschnitten zu verringern. Zum anderen werden dadurch die einzelnen von den Extrudern kommenden Materialströme bereits beim Durchfließen dieser konisch sich erweiternden Endabschnitte einander angenähert, so daß sie sich unmittelbar nach Passieren der stirnseitigen Begrenzung 38 des Ringkolbens 24, die im wesentlichen durch die Enden der die einzelnen Ringkanäle begrenzenden Wandungen definiert ist, sich innerhalb des Speicherraumes 28 zum Laminat vereinigen.

Der Laminatbildungsbereich befindet sich somit in unmittelbarem Anschluß an das freie Ende 38 des Ringkolbens 24, der beim Füllen des Speicherraumes 28 mit dem Laminat unter dessen Einwirkung nach oben verschoben wird, bis er seine obere Endposition 24a erreicht hat. Dabei kann es zweckmäßig sein, während dieses Füllhubes die Austrittsöffnung 20 zu verschließen, wenngleich dies nicht immer erforderlich ist, da in vielen Fällen der Widerstand, den der Ringkolben 24 mit seinen Antriebsmitteln 25, 27 dem den Speicherraum 28 füllenden Laminat entgegengesetzt, kleiner sein kann als der Strömungswiderstand im Verbindungskanal 39 und insbesondere der Austrittsöffnung 20.

Da aufgrund der vorbeschriebenen Ausgestaltung des Extrusionskopfes 10 und insbesondere des freien Endes des Ringkolbens 24 die einzelnen die Ringkanäle 34a, 35a, 36a verlassenden Materialströme im Augenblick des Verlassens des Ringkolbens 24 die gesamte Breite, also die radiale Erstreckung des Speicherraums 28 ausfüllen, führen die einzelnen Materialströme im Augenblick der Laminatbildung, also der Verbindung der einzelnen Materialströme zum Laminat, nur geringfügige Querbewegungen aus, um miteinander in Berührung zu kommen und sich dabei zum Laminat zu verbinden. Dies begünstigt die Gleichmäßigkeit der Laminatbildung und damit die des dabei entstehenden Laminats 40, zumal das Laminat 40 nach seiner Bildung innerhalb des Speicherraumes 28 ruht, also im wesentlichen unbewegt bleibt.

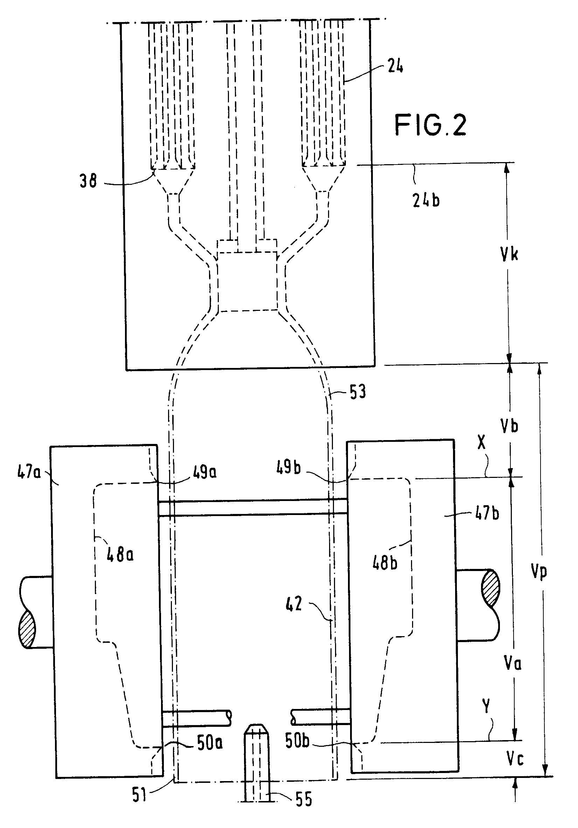

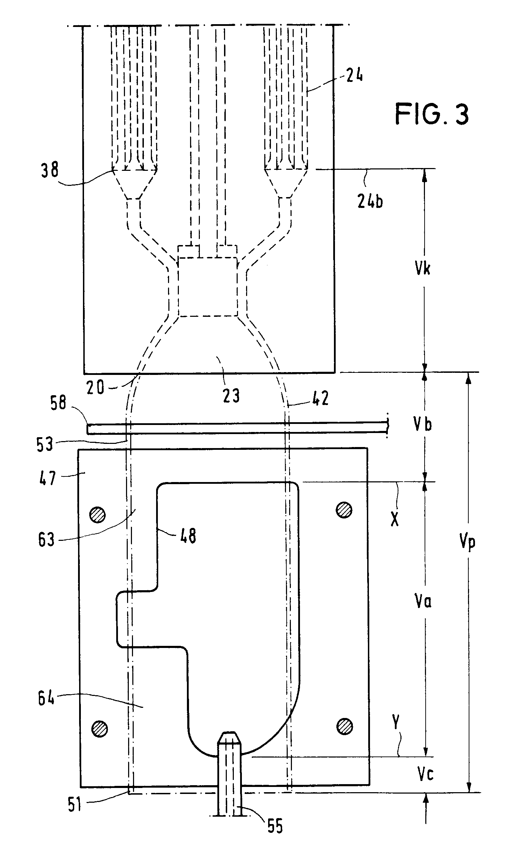

Sobald der Ringkolben 24 am Ende des Füllvorganges seine in Fig. 1 dargestellte obere Endlage 24a erreicht hat, in welcher der Speicherraum 28 mit dem Laminat gefüllt ist, wird der Ringkolben 24 durch Beaufschlagung des Kolbens 25 in Richtung auf die Extrusionsöffnung 20 bewegt, wobei im Zuge dieser Hubbewegung gleichzeitig das im Speicherraum 28 gespeicherte Laminat in Richtung auf die Austrittsöffnung 20 verschoben wird, bis der Ringkolben 24 seine in den Fig. 2 und 3 dargestellte untere Endposition 24b erreicht hat.

Nach diesem Entleerungshub verschiebt das aus den Ausgängen der Ringkanäle 34a, 35a, 36a austretende Kunststoffmaterial den Ringkolben 24 wieder nach oben in seine in Fig. 1 dargestellte Endlage 24a, wobei gleichzeitig der Speicherraum 28 mit Laminat gefüllt wird. Insbesondere Fig. 1 läßt erkennen, daß der Speicherraum 28 oberseitig durch das stirnseitige Ende 38 des in seiner Endposition 24a befindlichen Ringkolbens 24 begrenzt wird.

Da die Extruder kontinuierlich laufen, wird somit auch während des Entleerungshubes Material in den Extrusionskopf 10 gefördert. Dies hat zur Folge, daß das Volumen Vs des im Speicherraum 28 gespeicherten Materials geringer ist als das Volumen Vp des herzustellenden Vorformlings. Der Unterschied zwischen dem Volumen Vs des Speicherraums 28 und dem Volumen Vp des Vorformlings entspricht dem Volumen Ve des Materials, das während des Entleerungshubes von den Extrudern in den Extrusionskopf 10 hinein gefördert wird. Eine andere Folge der kontinuierlichen Extrusion besteht darin, daß das im Speicherraum befindliche Material während des durch den Ringkolben 24 ausgeführten Entleerungshubes nicht nur durch den Ringkolben, sondern auch durch das von den Extrudern während des Entleerungshubes in den Extrusionskopf 10 geförderte Material in Richtung auf die Austrittsöffnung 20 verdrängt wird.

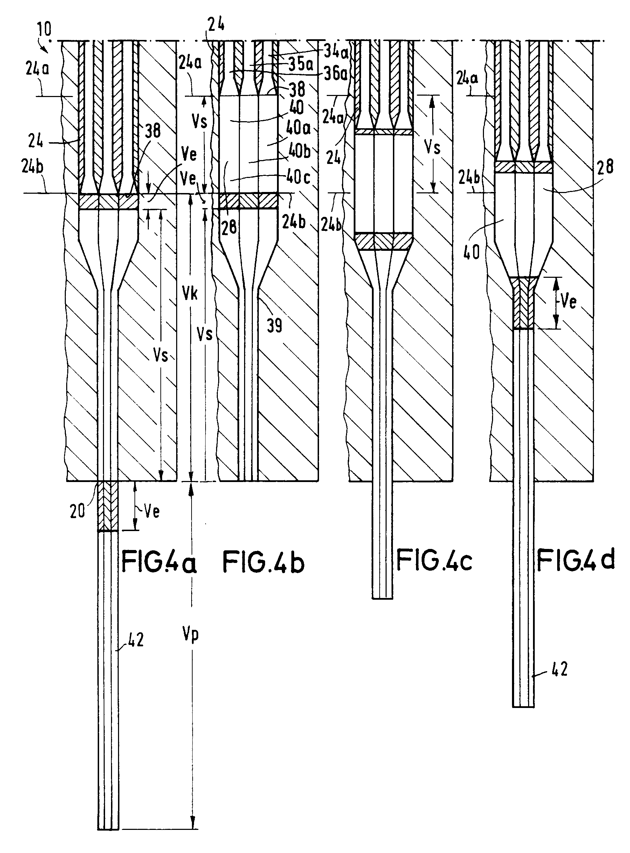

Diese Zusammenhänge werden im folgenden anhand der Fig. 4a bis 4d erläutert, die in schematischer Darstellung einen Ausschnitt aus dem Extrusionskopf 10 mit vier unterschiedlichen Positionen des Ringkolbens 24 zeigen.

Der Arbeitszyklus beginnt mit dem Ringkolben 24 in seiner der Austrittsöffnung 20 zugekehrten Endposition 24b, in welcher der Speicherraum 28 völlig entleert ist. Dies entspricht der Darstellung der Fig. 4a. Das stirnseitige Ende 38 des Ringkolbens 24 verläuft dabei in der Ebene 24b, die auch die der Austrittsöffnung 20 zugekehrte Begrenzung des Speicherraumes 28 darstellt. Unter der Wirkung der aus den Extrudern kommenden und in den Speicherraum 28 eintretenden Kunststoffmaterial-Ströme wird in der bereits beschriebenen Weise der Ringkolben 24 nach oben in seine der Austrittsöffnung 20 des Extrusionskopfes 10 abgekehrte Endposition 24a verschoben, wobei gleichzeitig der Speicherraum 28 mit Laminat gefüllt wird.

Sobald der Ringkolben 24 seine in Fig. 4b dargestellte obere Endposition 24a erreicht hat, in welcher sein stirnseitiges Ende 38 die obere Begrenzung des Speicherraums bildet und somit der Speicherraum 28 vollständig gefüllt ist, wird durch entsprechende Beaufschlagung des Kolbens 25 der Ringkolben 24 wieder in Richtung auf seine untere Endposition 24b bewegt, wobei gleichzeitig das im Speicherraum 28 und im Verbindungskanal 39 befindliche Laminat in Richtung auf die Austrittsöffnung 20 verdrängt wird.

Auch während des Entleerungshubes werden aufgrund des kontinuierlichen Betriebs der Extruder Materialien durch die Kanäle 34a, 35a, 36a in den Speicherraum gefördert. Fig. 4c zeigt den Ringkolben 24 in einer Zwischenposition kurz nach Beginn des Entleerungshubes. Das während des Entleerungshubes durch die Ringkanäle 34a, 35a, 36a zusätzlich in den Speicherraum 28 hinein extrudierte Material, das einen Laminatabschnitt Ve bildet, ist in den Fig. 4a bis d schraffiert dargestellt. Die Fig. 4c und d lassen erkennen, daß dieser Materialanteil im Verlauf des Entleerungshubes immer größer wird, bis an dessen Ende, wenn der Ringkolben 24 gemäß der Darstellung der Fig. 4a die Endposition 24b erreicht hat, dieser hinzuextrudierte Anteil Ve sein größtes Volumen erreicht hat. Da der Laminatbildungsbereich sich unmittelbar unterhalb der unteren Begrenzung 38 des Ringkolbens 24 befindet, bewegt sich der Laminatbildungsbereich synchron mit den Bewegungen des Ringkolbens 24, also während des Entleerungsvorganges in Richtung auf die Austrittsöffnung 20 und während des Füllvorganges von der Austrittsöffnung 20 weg.

Mithin besteht das während des Entleerungshubes aus dem Speicherraum 28 in Richtung auf die Austrittsöffnung 20 verdrängte Laminat aus zwei Volumenanteilen, nämlich dem Volumenanteil Vs, welcher auf das gespeichert gewesene Material zurückgeht, und einem kleineren Volumenanteil Ve, der während des Entleerungshubes durch den Ringkolben 24 hindurch hinzuextrudiert worden ist.

Während des Entleerungshubes wird das Laminat, welches sich vor Beginn des Ausstoßvorganges gemäß der Darstellung der Fig. 4a zwischen dem der Austrittsöffnung 20 zugekehrten Ende 24b des Speicherraumes und der Austrittsöffnung 20, also im Verbindungskanal 39 befindet, durch das unter der Einwirkung des Ringkolbens 24 verdrängte Material mit dem Volumen Vs und das während des Entleerungshubes von den Extrudern hinzuextrudierte Material mit dem Volumen Ve durch die Austrittsöffnung 20 unter Bildung eines Vorformlings 42 mit dem Volumen Vp aus dem Extrusionskopf 10 ausgestoßen. Demzufolge setzen sich auch die in jedem Arbeitszyklus hergestellten Vorformlinge zusammen aus einem Volumen-Abschnitt Vs, der aus dem gespeicherten Material entstanden ist, und einem Volumen-Abschnitt Ve, der während des Entleerunghubes hinzu extrudiert worden ist. Beide Abschnitte Vs und Ve sind auch im Vorformling 42 räumlich voneinander getrennt, wobei sich der Abschnitt Ve in Fließrichtung des Materials durch den Verbindungskanal 39 am Ende des jeweiligen Volumen-Abschnittes Vp befindet.

Während des Füllvorgangs einerseits und des Entleerungsvorgangs andererseits herrschen im Extrusionskopf unterschiedliche Druckverhältnisse mit der Folge, daß beim Übergang von dem einen Vorgang oder der einen Betriebsphase zum anderen Vorgang bzw. zur anderen Betriebsphase Druckänderungen eintreten, die zum Entstehen von Druckungleichgewichten im System führen können. Nach Beginn der jeweiligen Betriebsphase stellt sich dann wieder ein Druckgleichgewicht ein. So stellt sich auch während des Ausstoßvorganges in dem von den einzelnen Materialströmen und dem Laminat 40 gebildeten System wieder ein Druckgleichgewicht ein, so daß an der Laminatbildungsstelle die die Schichten 40a, 40b, 40c bildenden Materialströme bei Verlassen der Ringkanäle 34a, 35a, 36a sich zu einem bezüglich Dicke und relativer Anordnung der einzelnen Schichten regelmäßig ausgebildeten Laminat 40 vereinigen. Dabei ist die Auswahl der die einzelnen Teilströme bildenden Materialien so getroffen, daß die resultierenden Schichten 40a, 40b, 40c an ihren Kontaktflächen eine haltbare Verbindung miteinander eingehen.

Die vorbeschriebenen Betriebsbedingungen und die bereits einleitend beschriebenen Eigenschaften der meisten Kunststoffe haben zur Folge, daß in der ersten Phase des Entleerungshubes der durch die Bewegung des Ringkolbens 24 bewirkte Druckanstieg zunächst eine gewisse Komprimierung unter gleichzeitiger Volumenverringerung des im Speicherraum 28 und in den diesen vorgeschalteten Kanalsystemen, also beispielsweise in den Ringkanälen 34a, 35a, 36a vorhandenen einzelnen Materialströme Kunststoffes verursacht, bevor am unteren Ende des Speicherraumes 28 eine auf die Verschiebung des Ringkolbens 24 zurückgehende Bewegung des aus den einzelnen Teilströmen gebildeten Laminats beginnt. Dies hätte möglicherweise dann keine oder nur geringe Auswirkungen, wenn alle die Teilströme bildenden Materialien sich in gleicher Weise verhielten und die Kanalsysteme gleiche Volumen aufwiesen. Dies ist jedoch im allgemeinen nicht der Fall. Vielmehr können unterschiedliche Materialien in unterschiedlichen Ausmaßen komprimierbar sein. In der Praxis werden die einzelnen Schichten des Laminats häufig unterschiedlich dick sein. Da anzustreben ist, daß die einzelnen Materialströme im Laminatbildungsbereich möglichst geringe Geschwindigkeitsunterschiede voneinander haben, weisen die Kanalsysteme häufig entsprechend den Dicken der einzelnen Schichten unterschiedliche Volumen auf mit der vorbeschriebenen, sich daraus ergebenden Konsequenz.

Alle diese Einflüsse, die im wesentlichen gleichzeitig auftreten, somit einander überlagern und bezüglich ihrer Größe und ihrer Folgen nicht ohne weiteres bestimmbar sind, wirken sich zunächst in der ersten Phase des Entleerungshubes aus, da in dieser Phase aufgrund der Änderung der betrieblichen Verhältnisse im Extrusionskopf 10 - Ende des Speichervorganges und daran anschließend Anfang des Entleerungsvorganges - ein merklicher Druckanstieg erfolgt mit dem Ergebnis, daß im Laminatbildungsbereich, also unmittelbar unterhalb des freien Endes 38 des Ringkolbens 24, ein Druckungleichgewicht eintritt, welches dazu führt, daß die Fließbewegungen der einzelnen die Schichten des Laminats bildenden Materialströme ungleichmäßig werden und bezüglich ihrer absoluten und relativen Lage unregelmäßig positioniert sind und ggf. dadurch von ihrer jeweiligen Soll-Schichtstärke abweichende Schichtstärken erhalten. Das bereits gespeicherte Material bleibt davon unbetroffen, da es bereits in Laminatform vorliegt. Nach Beginn des Entleerungshubes stellt sich wieder ein Druckgleichgewicht ein, welches das Entstehen eines regelmäßig ausgebildeten Laminats bewirkt.

Eine weitere Unregelmäßigkeit kann am Anfang des Füllhubes ggf. sogar bereits am Ende des vorangegangenen Entleerungshubes eintreten, und zwar insbesondere aufgrund der dann eintretenden Dekomprimierung der die einzelnen Schichten bildenden Materialien nach Beendigung der Druckbeaufschlagung durch den Ringkolben 24. Dabei wird eine Dekomprimierung des Materials erfolgen, das sich zwischen Speicherraum 28 und Austrittsöffnung 20 innerhalb des Verkindungskanals 39 befindet. Dies ist für dieses Material ohne nachteilige Folgen, da das im Verbindungskanal 39 befindliche Material bereits laminatförmig ist. Die Dekomprimierung und die dadurch bedingte Volumenvergrößerung werden sich jedoch wiederum im Laminatbildungsbereich, also im Bereich unmittelbar unterhalb des freien Endes 38 des Ringkolbens 26, am Anfang des nunmehr beginnenden Füllhubes des Ringkolbens 24 nachteilig auswirken. Hinzu kommen in beiden Fällen die durch die vorbeschriebenen Einflüsse bewirkten Volumenänderungen in den Kanalsystemen in Fließrichtung vor dem Laminatbildungsbereich.

Die Struktur dieses während des Entleerungshubes gebildeten Laminatabschnittes wird, mit Ausnahme des zu Beginn des Entleerungshubes bei im Extrusionskopf vorhandenem Druckungleichgewicht gebildeten Laminatabschnittes, im allgemeinen einwandfrei sein. Es kann jedoch nicht ausgeschlossen werden, daß zumindest bei bestimmten Kunststoffmaterialien dieser Laminatabschnitt insbesondere aufgrund der unterschiedlichen Druckverhältnisse im Extrusionskopf eine andere Beschaffenheit aufweist als der während des Füllhubes gebildete Laminatabschnitt.

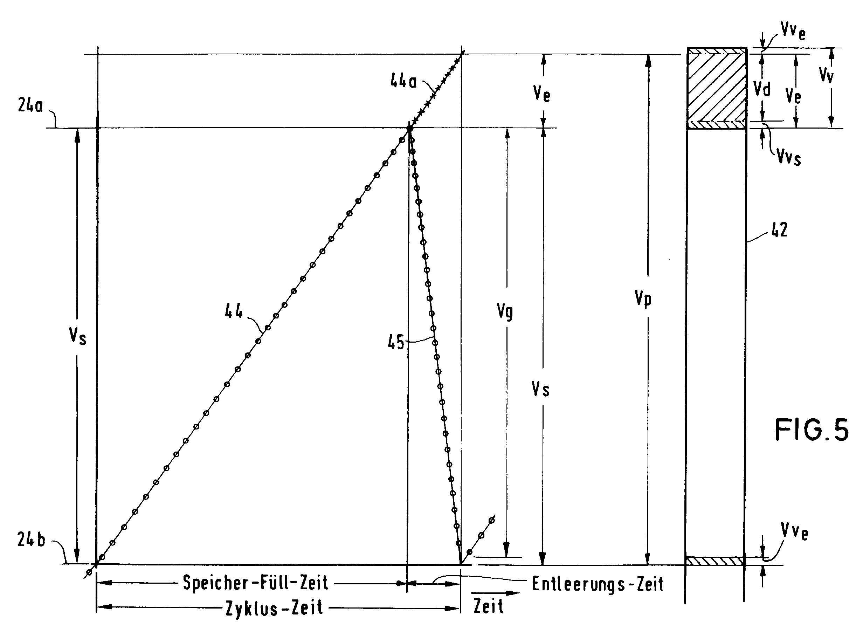

Die sich innerhalb eines Arbeitszyklus' ergebenden Betriebszustände sowie die Auswirkungen derselben bezüglich des Aufbaus des in einem Arbeitszyklus hergestellten Vorformlings sind in Fig. 5 grafisch dargestellt. Die Zykluszeit ist auf der Abzisse, das Materialvolumen ist auf der Ordinate aufgetragen. Bei dem in Fig. 5 angenommenen Verfahrensablauf, der dem im Zusammenhang mit den Fig. 4a - 4d erläuterten Verfahrensasblauf entspricht, setzt sich die Zykluszeit zusammen aus der Zeit, die zum Füllen des Speicherraumes 28 erforderlich ist, und der Zeit, die benötigt wird, um das nach dem Füllen des Speicherraumes 28 in diesem befindliche Material auszustoßen. Die Zeit für den Entleerungshub ist wesentlich kürzer als die Füllzeit.

In Fig. 5 ist rechts neben dem Koordinatensystem die Verteilung der Volumenabschnitte im während eines Arbeitszyklus' hergestellten Vorformlings 42 mit dem Volumen Vp über dessen Länge mit Bezug auf das Koordinatensystem derart dargestellt, daß bestimmte Volumenabschnitte bestimmten Verfahrensabschnitten des Arbeitszyklus' zugeordnet sind.

Der Kurvenabschnitt 44 zeigt den Ablauf des Füllvorganges, also die Zunahme des Volumens an gespeichertem Material im Speicherraum 28 in Abhängigkeit von der Zeit. Die Steigung des Kurvenabschnittes 44 entspricht der Förderung aller Extruder. Der Füllhub ist abgeschlossen, sobald der Ringkolben 24 seine der Austrittsöffnung 20 abgekehrte Endposition 24a erreicht hat, der Speicherraum 28 somit mit Laminat gefüllt ist, dessen Volumen mit Vs bezeichnet ist.

Im Zuge des folgenden Ausstoßhubes, in dessen Verlauf der Ringkolben 24 sich aus der Position gemäß Fig. 1 bzw. 4b in die gemäß Fig. 2 bzw. 4a bewegt, wird das im Speicherraum 28 befindliche Laminat mit dem Volumen Vs in Richtung auf die Austrittsöffnung 20 verschoben, wobei gleichzeitig im Anschluß an das in Bewegungsrichtung hinten liegende Ende des gespeicherten Laminats Material hinzu extrudiert wird, dessen Volumen während des Ausstoßvorganges größer wird und am Ende des Ausstoßhubes das Volumen Ve ausmacht. Der von den Extrudern hinzu extrudierte Volumenanteil entspricht dem Kurvenabschnitt 24a. In der ersten Phase des Ausstoßhubes entsteht aus dem hinzu extrudierten Material ein Volumen-Unterabschnitt Vvs, der Teil des Volumen-Abschnittes Ve ist und aufgrund des zu Beginn des Ausstoßvorganges stattfindenden Druckwechsels eine gestörte Struktur aufweisen kann in dem Sinne, daß die einzelnen Schichten des Laminats nicht gleichmäßig oder vollständig ausgebildet sind und/oder nicht ihre richtige Lage einnehmen. Sobald im Verlauf des weiteren Ausstoßvorganges sich im System erneut ein Druckgleichgewicht eingestellt hat, schließt sich an den Abschnitt Vvs ein Abschnitt Vd an, der aus im allgemeinen regelmäßig geschichtetem Laminat besteht, das jedoch eine Beschaffenheit aufweisen kann, die sich von der des Laminats 40, mit dem Volumen Vg welches im Speicherraum 28 gespeichert war, unterscheidet. Beide Laminat-Abschnitte Vvs und Vd bilden zusammen den Volumen-Abschnitt Ve, der während des Ausstoßhubes zum gespeicherten Laminat hinzu extrudiert worden ist. Auch Fig. 5 zeigt, daß der den Vorformling 42 bildende Volumen-Abschnitt Vp aus zwei Volumen-Abschnitten Vs und Ve besteht, von denen letzterer sich aus zwei Volumen-Abschnitten Vve und Vd zusammensetzt.

Spätestens zu Beginn des darauffolgenden Füllhubes, in dessen Verlauf der Ringkolben entsprechend der Kurve 44 von der Position 24b in die Position 24a bewegt wird, erfolgt innerhalb des Extrusionskopfes 10 erneut ein Druckwechsel mit der Folge, daß der zu Beginn des Füllhubes sich im Speicherraum 28 bildende Laminat-Unterabschnitt Vve ebenfalls unregelmäßig ausgebildet, also gestört sein kann. Bald nach Beginn des Füllhubes stellt sich jedoch wiederum ein Druckgleichgewicht an der Laminatbildungsstelle ein, so daß das unter diesen Bedingungen im Speicherraum 28 entstandene Laminat wieder gleichmäßig und ungestört ausgebildet ist.

Der zu Beginn des Füllhubes gebildete gestörte Laminat-Unterabschnitt Vve schließt sich an den zuvor gebildeten Laminat-Abschnitt Ve an, der den Volumen-Unterabschnitt Vvs enthält. Mithin stellen der Volumen-Abschnitt Ve einschließlich des Volumen-Unterabschnittes Vvs gestörten Laminats und der Volumen-Unterabschnitt Vve gestörten Laminats einen durchgehenden Volumen-Abschnitt Vv innerhalb des im Extrusionskopf gebildeten Laminats dar.

Sobald der Ringkolben 24 seine obere Endposition 24a erreicht hat, beginnt wieder ein Entleerungshub, in dessen Verlauf der Ringkolben 24 von der Position 24a in die Position 24b verschoben wird. Der Kurvenabschnitt 45 der Fig. 5 entspricht der Abnahme des Volumens des im Speicherraum 28 gespeicherten Materials während des Entleerungshubes. Da das Materialvolumen im Speicherraum während des Füllvorganges abhängt von der jeweiligen Position, die der Ringkolben 24 einnimmt, kann das Koordinatensystem mit den Kurvenabschnitten 44 und 45 auch als ein Weg-Zeit-Diagramm der Bewegung des Kolbens während eines Arbeitszyklus' verstanden werden. Dabei entspricht die Abzisse der unteren Begrenzung 24b des Speicherraumes 28. Der Abstand zwischen Abzisse und Linie 24a entspricht somit dein Volumen Vs des Speicherraums 28 und somit dem Volumen des darin am Ende des Füllhubes gespeicherten Materials.

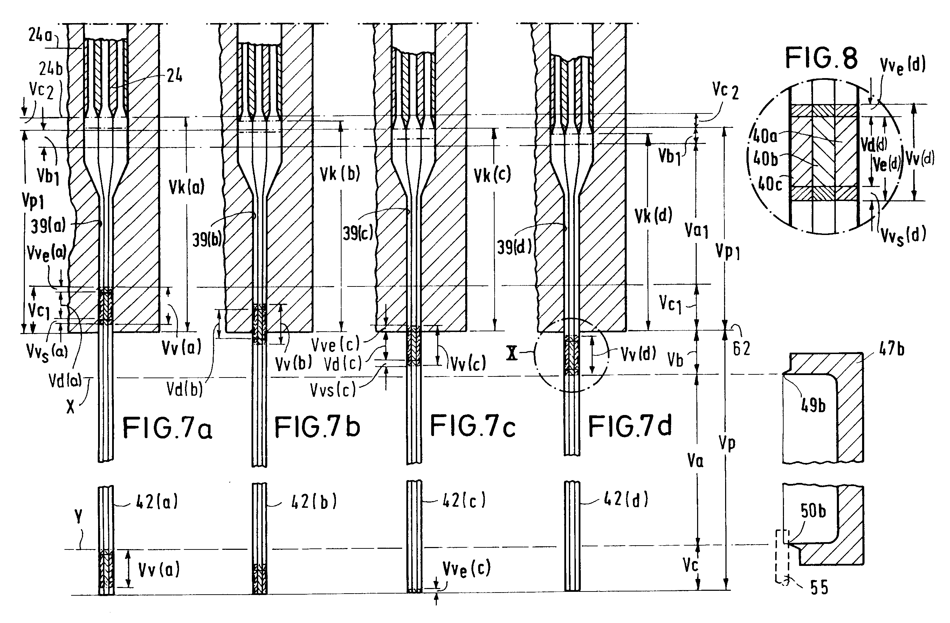

Aus den vorstehenden Erläuterungen ergibt sich, daß der Volumen-Abschnitt Vv, dessen Ausbildung in Fig. 8 und dessen mögliche relative Lage innerhalb eines Vorformlings 42 in Fig. 8 in Verbindung mit Fig. 7d dargestellt ist, aus zwei Volumen-Teilabschnitten Vvs und Vve gestörten Laminats sowie einem Volumen-Unterabschnitt Vd besteht, der zwischen den beiden Volumen-Unterabschnitten Vvs und Vve angeordnet ist und von diesen begrenzt wird.

Unterhalb des Extrusionskopfes 10 ist eine Blasform 47 angeordnet, die aus zwei Teilen 47a, 47b besteht. Beide Blasformteile sind an ihren einander zugekehrten Seiten mit jeweils einer Ausnehmung versehen. Bei geschlossener Blasform (Fig. 1) ergänzen sich diese Ausnehmungen zu einem Formnest 48. Die Formhälften 47a, 47b sind darüber hinaus mit Quetschkanten 49a, 49b; 50a, 50b zumindest in den Bereichen versehen, an denen vom Vorformling 42 beim Schließen der Form durch Zusammenfahren der beiden Formhälften 47a, 47b überschüssiges Material abgequetscht wird. Dies ist normalerweise an den beiden Enden des Vorformlings 42 der Fall.

Beim Ausstoßen des Vorformlings 42 aus dem Extrusionskopf 10 ist die Blasform 47 geöffnet (Fig. 2). Der zunächst zwischen beiden Formteilen 47a, 47b der geöffneten Blasform 47 befindliche, den Vorformling 42 bildende Volumen-Gesamtabschnitt Vp ist länger als die vertikale Erstreckung des Formnestes 48, das bei geschlossener Blasform 47 aus den beiden Ausnehmungen 48a, 48b in den Formteilen 47a, 47b gebildet wird. Am unteren Ende des Formnestes ist ein Volumen-Endabschnitt Vc des Volumen-Gesamtabschnittes Vp vorhanden, der sich unterhalb der zur Längsachse des Vorformlings 42 senkrechten Tangente y an den an dieser Seite der Blasform 47 vorhandenen Quetschkanten 50a, 50b befindet. Am oberen Ende des Volumen-Gesamtabschnittes Vp ist ein Volumen-Endabschnitt Vb vorhanden, der sich oberhalb der Tangente x an den oben an den Formhälften 47a, 47b angebrachten Quetschkanten 49a, 49b, also ebenfalls außerhalb des Formnestes 48 befindet. Beim Schließen der Blasform 47 durch Bewegen der beiden Blasformteile 47a, 47b in die in Fig. 1 dargestellte Position werden die unten und oben am Vorformling 42 befindlichen Volumen-Endabschnitte Vc, Vb als Überschußmaterial, welches Abfall darstellt, der im allgemeinen recycliert wird, durch die zugehörigen Abquetschkanten 50a, 50b bzw. 49a, 49b abgequetscht.

Fig. 3 der Zeichnung läßt erkennen, daß darüber hinaus auch am linken, seitlichen Bereich des Formnestes 48 Teilbereiche 63, 64 des Vorformlinges 42 sich außerhalb des Formnestes 48 befinden. Somit werden auch seitlich neben dein Formnest 48 die Teilbereiche 63, 64 des Vorformlings 42 beim Schließen der Blasform 47 durch letztere abgequetscht, wobei zusätzliche Abfallteile entstehen. Eine derartige Arbeitsweise ist insbesondere bei komplizierter Gestalt des herzustellenden Artikels mitunter notwendig. Sie gehört zum Stand der Technik und ist nicht Bestandteil der Erfindung, die sich mit den Abfallteilen 51, 53 befaßt, die oberhalb bzw. unterhalb der Tangenten x und y anfallen.

Der innerhalb des Formnestes 48 und somit zwischen den Abquetschkanten 50a, 50b einerseits und 49a, 49b andererseits verbleibende Bereich des Volumen-Mittelabschnittes Va des Vorformlings 42 wird durch ein Druckmittel, welches durch einen Blasdorn 55 in das Innere des im Formnest 48 befindlichen Bereichs des Mittelabschnittes Va eingeführt wird, bis zur Anlage an der Wandung des Formnestes 48 aufgeweitet. Auf diese Weise entsteht der Artikel 57, der an seinen beiden Enden die beiden überschußmaterial bildenden Abfallteile 51, 53 aufweist, die auf die Volumen-Endabschnitte Vc, Vb zurückgehen. Diese Abfallteile 51, 53 bleiben im allgemeinen über dünne Stege mit dem aufgeweiteten Artikel 57 verbunden. Die Stege werden beim Entfernen der Abfallteile durchtrennt. Letzteres geschieht überwiegend nach ausreichender Abkühlung des Artikels 57 und nach dem Öffnen der Blasform 47, wobei, wenn es sich um einen größeren Artikel 57 handelt, dieser durch einen Greifer 58, dessen Teile 58a, 58b am Abfallteil 53 angreifen, aus der Blasform 47 herausgenommen wird. Beim Herausnehmen des Artikels 57 aus der Blasform 47 wird das obere Ende des Überschußmaterial darstellenden Abfallteiles 53 an der Öffnung 20 des Extrusionskopfes abgerissen, weil dort das Material noch am heißesten und damit am weichsten ist. Die Länge und damit das Volumen des den Vorformling 42 darstellenden Volumen-Gesamtabschnittes Vp werden durch den Abstand zwischen seinem unteren, freien Ende und der Austrittsöffnung 20 des Extrusionskopfes 10 bestimmt. Da die Dimensionen des Verbindungskanals 39 zwischen der der Austrittsöffnung 20 zugekehrten Endposition 24b des Ringkolbens 24 und der Austrittsöffnung 20 beim Ausführungsbeispiel nach den Fig. 1 - 5 so gewählt sind, daß dessen Volumen Vk dem Volumen Vp eines Vorformlings 42 entspricht, verbleibt das während eines Entleerungshubes durch den Ringkolben 24 und die kontinuierlich laufenden Extruder in den Verbindungskanal 39 verschobene Material, das der Summe der Volumen Vs und Ve entspricht, in diesem Verbindungskanal während der Dauer eines Arbeitszyklus', bevor es dann im darauffolgenden Arbeitszyklus aus dem Extrusionskopf 10 durch dessen Austrittsöffnung 20 ausgestoßen und im Zusammenhang mit der Herstellung eines Artikels 57 an der Austrittsöffnung 20 abgetrennt wird.

Diese Ausgestaltung ermöglicht es, die bei jedem Arbeitszyklus möglicherweise entstehenden Bereiche im Laminat, die entweder gestört sind, wie die Unterabschnitte Vve und Vvs, oder aber bezüglich ihrer allgemeinen Beschaffenheit möglicherweise abweichen von dem Laminat im Volumenabschnitt Vg (Fig. 5), wie das beispielsweise bei dem Volumen-Unterabschnitt Vd der Fall sein kann, in wenigstens einem der beiden Volumen-Endabschnitte Vb bzw. Vc des Vorformlings 42 zu plazieren. Diese Endabschnitte werden beim Schließen der Blasform 47 außerhalb des Formnestes 48 bleiben, also nicht Bestandteil des durch Aufweiten hergestellten Artikels 57 werden.

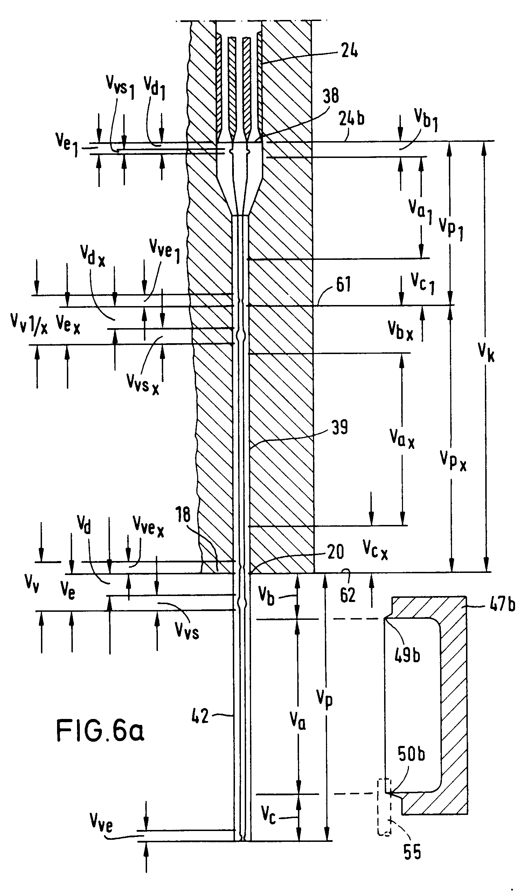

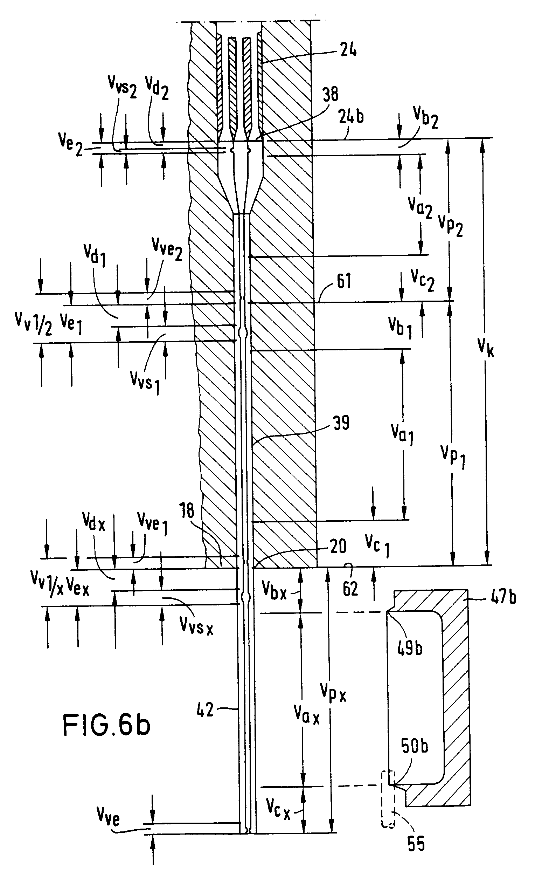

Vk kann, abweichend von dem Ausführungsbeispiel gemäß den Fig. 1 bis 5, unter anderem auch dem ganzzahligen Mehrfachen des Volumens Vp entsprechen. Der sich in beiden Fällen ergebende Effekt wird im folgend anhand der Fig. 6a und 6b erläutert, die in sehr schematischer Darstellung jeweils einen Längsschnitt durch eine Hälfte jenes Bereiches des Extrusionskopfes 10 zeigen, die den Verbindungskanal 39 enthält. Letzterer weist zwischen der Ebene 24b, in welcher sich der Ringkolben 24 am Ende des Entleerungshubes befindet, und der Austrittsöffnung 20 ein Volumen Vk auf, welches 2Vp beträgt und mithin so bemessen ist, daß es dem Materialvolumen entspricht, welches zur Herstellung von zwei nacheinander zu extrudierenden Vorformlingen 42 erforderlich ist. In den Figuren 6a und 6b sind die Teile, die den Teilen des Ausführungsbeispiels gemäß den Fig. 1 bis 5 entsprechen, mit gleichen Bezugszeichen versehen.

Die Fig. 6a und 6b zeigen den Betriebszustand am Ende jeweils eines von zwei aufeinanderfolgenden Entleerungshüben des Speicherkolbens 24. Bei dem in Fig. 6a dargestellten Betriebszustand am Ende des ersten Entleerungshubes enthält der Verbindungskanal 39 die beiden in Strömungsrichtung des Laminats hintereinander angeordneten Volumen-Gesamtabschnitte Vp1 und Vpx, deren jeder gemäß der genannten Voraussetzung gleich ist dem Volumen Vp eines Vorformlings 42. Der Volumen-Gesamtabschnitt Vpx befindet sich beim Betriebszustand gemäß Fig. 6a unmittelbar vor der Austrittsöffnung 20, während der Volumen-Gesamtabschnitt Vp1 den Bereich zwischen dem Volumen-Gesamtabschnitt Vpx und der Ebene 24b ausfüllt, die die der Austrittsöffnung 20 zugekehrte Begrenzung des Speicherraums 28 definiert. Unmittelbar unterhalb der Ebene 24b befindet sich in dem Volumen-Gesamtabschnitt Vp1 ein Volumen-Teilabschnitt Ve1, dessen Entstehung während des vorangegangenen Entleerungshubes bereits im Zusammenhang mit den Fig. 4a bis 4d und 5 beschrieben worden war. Dieser Volumen-Teilabschnitt Ve1 bildet somit den in Fließrichtung des Laminats hinteren Endbereich des Volumen-Gesamtabschnittes Vp1, wobei er innerhalb des Volumen-Endabschnittes Vb1 angeordnet, dabei jedoch kürzer ist als letzterer und in einem Abstand vom Volumen-Mittelabschnitt Va1 endet. Der Volumen-Teilabschnitt Ve1 setzt sich zusammen aus dem Volumen-Unterabschnitt Vvs1 sowie dem Volumen-Unterabschnitt Vd1, von denen der Unterabschnitt Vvs1 einen Bereich gestörten Laminats darstellt.

Im folgenden Arbeitszyklus wird zunächst der Ringkolben 24 durch das aus den Extrudern kommende Material nach oben verschoben, wobei gleichzeitig der Speicherraum 28 mit diesem Material gefüllt wird. Zu Beginn dieses Füllhubes erfolgt wiederum durch ungleichmäßige Druckverhältnisse und andere Einwirkungen eine Beeinflussung des Materials an der Laminatbildungsstelle, also unmittelbar vor dem stirnseitigen Ende 38 des Ringkolbens 24, der sich während dieser ersten Phase des Füllvorganges kurz oberhalb der Ebene 24b befindet. Die Folge dieser ungleichmäßigen Druckverhältnisse besteht darin, daß das in der ersten Phase des Füllhubes im Speicherraum sich bildende Laminat auch gestört sein kann. Dabei handelt es sich um den Volumen-Unterabschnitt Vve2, der sich somit unmittelbar an den Volumen-Teilabschnitt Ve1 anschließt (Fig. 6b). Sobald sich Druckgleichgewicht eingestellt hat, wird das Laminat während des übrigen Füllhubes im Speicherraum 38 mit regelmäßiger Struktur gebildet.

Beim darauffolgenden Entleerungshub wird innerhalb des Verbindungskanals 39 der Volumen-Gesamtabschnitt Vp2 gebildet (Fig. 6b), der den Raum des Volumen-Gesamtabschnittes Vp1 einnimmt und letzteren in Richtung auf die Austrittsöffnung 20 in die Position verdrängt, die vorher der Volumen-Gesamtabschnitt Vpx eingenommen hatte, der gleichzeitig zur Bildung eines Vorformlings 42 aus dem Extrusionskopf 10 ausgestoßen wird. Der Betriebszustand am Ende dieses Entleerungshubes ist in Fig. 6b dargestellt.

Dabei bilden Volumen-Teilabschnitt Ve1 des Volumen-Gesamtabschnittes Vp1 und Volumen-Unterabschnitt Vve2 des nächsten Volumen-Gesamtabschnittes Vp2 den Volumen-Abschnitt Vv1/2, der ein Laminat enthält, dessen beide Unterabschnitte Vvs1 und Vve2 gestört sind, wobei der dazwischen befindlichen Volumen-Unterabschnitt Vd1 ein Laminat mit normaler Struktur enthält, das jedoch in anderer Hinsicht von der Beschaffenheit des Laminats im Volumen-Mittelabschnitt Va abweichen kann.

Am Ende dieses Entleerungshubes liegt somit ein Betriebszustand vor, bei welchem die - fiktive - Trennebene 61 zwischen den Volumen-Gesamtabschnitten Vp2 und Vp1 durch den zumindest teilweise gestörten Volumen-Abschnitt Vv1/2 hindurchgeht und diesen derart unterteilt, daß der der Austrittsöffnung 20 abgekehrte Unterabschnitt Vve2 des Abschnittes Vv1/2 Teil des Volumen-Gesamtabschnittes Vp2 und innerhalb desselben Teil des Volumen-Endabschnittes Vc2 und somit eines späteren Abfallstückes 51 ist und der der Austrittsöffnung 20 zugekehrte Teilabschnitt Ve1 des Volumen-Abschnittes Vv1/2 Teil des Volumen-Gesamtabschnittes Vp1 und innerhalb desselben Teil des Volumen-Endabschnittes Vb1 ist, aus welchem ein Abfallstück 53 entsteht. Volumen-Unterabschnitte Vve2 und Volumen-Teilabschnitt Ve1 sind kürzer als der jeweilige Volumen-Endabschnitt Vc2 bzw. Vb1, so daß der Volumen-Abschnitt Vv1/2 sich nicht in den jeweiligen Volumen-Mittelabschnitt Va1 bzw. Va2 erstreckt, aus welchem ein Artikel 57 durch Aufweiten in der Blasform 47 hergestellt wird.

Entsprechendes gilt auch für die anderen Volumen-Gesamtabschnitte Vp (Fig. 6a) und Vpx (Fig. 6b), deren Mittelabschnitte, Endabschnitte und Teil- und Unterabschnitte mit entsprechenden Bezugszeichen versehen sind.

Im darauffolgenden Arbeitszyklus wird nach vorangegangenem Füllen des Speicherraums der Volumen-Gesamtabschnitt Vp1 durch die Austrittsöffnung 20 des Extrusionskopfes 10 ausgestoßen, so daß er am Ende des Entleerungshubes am Extrusionskopf hängend einen Vorformling 42 bildet und somit die Position des Volumen-Gesamtabschnittes Vp der Fig. 6a einnimmt. Der Volumen-Gesamtabschnitt Vp2 nimmt dann die Position des Volumen-Gesamtabschnittes Vpx in Fig. 6a ein. Die folgenden Erläuterungen werden deshalb unter Bezugnahme auf die beiden Volumen-Gesamtabschnitt Vp und Vpx in Fig. 6a gegeben. Die Ebene 62, in welcher die Austrittsöffnung 20 liegt, stellt die Trennebene zwischen den beiden Volumen-Gesamtabschnitten Vp und Vpx dar. Diese Trennebene 62 ist nicht fiktiv, da, nachdem die Blasform 47 um den Vorformling 42 geschlossen worden ist und ggf. nach dem Aufweiten des Vorformlings 42 in der Blasform der Volumen-Gesamtabschnitt Vp, d.h. der daraus hergestellte Artikel 57 bzw. dessen Abfallteil 53, welches dem Volumen-Endabschnitt Vb entspricht, in der Ebene 62 von dem im Extrusionskopf 10 befindlichen Material, also dem Volumen-Gesamtabschnitt Vpx abgetrennt wird.

Die Trennebene 62 läuft analog der Ebene 61 ebenfalls durch den zu beiden Seiten der Austrittsöffnung 20 befindlichen Volumen-Abschnitt Vv gestörten Laminats hindurch, von dem der Volumen-Unterabschnitt Vvex mit dem Volumen-Gesamtabschnitt Vpx bis zum nächsten Arbeitszyklus noch im Extrusionskopf 10, d.h. in dem der Austrittsöffnung 20 benachbarten Abschnitt des Verbindungskanals 39 bleibt, wohingegen der Volumen-Teilabschnitt Ve Teil des den Vorformling 42 bildenden Volumen-Gesamtabschnittes Vp ist und sich bereits außerhalb des Extrusionskopfes 10 befindet und somit mit dem Vorformling bzw. dem daraus hergestellten Artikel vom Extrusionskopf abgetrennt wird.

Beim nächstfolgenden Arbeitszyklus, bei welchem der Volumen-Gesamtabschnitt Vpx durch die Austrittsöffnung 20 ausgestoßen wird, befindet sich der Volumen-Teilabschnitt Vvex des Volumenabschnittes Vv am freien Ende des Vorformlings 42 im Bereich des Volumen-Endabschnittes Vcx, der beim Schließen der Blasform 47 außerhalb des Formnestes 48 bleibt und am aufgeweiteten Artikel 57 das untere Abfallteil 51 bildet. Der Volumen-Teilabschnitt Vvex nimmt dann die Position des Volumen-Teilabschnittes Vve der Fig. 6a ein.

Auf die vorbeschriebene Weise ist es mit einfachen Mitteln möglich, die Volumen-Unterabschnitte Vve, Vvs und Vd jeweils in den Volumen-Endabschnitten Vb bzw. Vc des den Vorformling bildenden Gesamt-Volumenabschnittes Vp zu plazieren, die beim Schließen der Blasform vom Volumen-Mittelabschnitt Va, aus welchem der Artikel 57 hergestellt wird, abgequetscht werden. Somit ist sichergestellt, daß der Volumen-Mittelabschnitt Va und damit der fertige Artikel 57 keine Wandbereiche aufweisen, in denen das Laminat unregelmäßig ausgebildet oder sonst eine Beschaffenheit aufweist, die abweicht von der normalen Beschaffenheit des Laminats.

Bei der im Zusammenhang mit den Fig. 6a, 6b beschriebenen Verfahrensweise wird der jeweilige Volumenabschnitt Vv mit zumindest teilweise unerwünschten oder nicht kontrollierbaren Eigenschaften in der Trennebene 62 derart unterteilt, daß seine Volumen-Unterabschnitte Vve, Vvs und Vd in zwei Volumen-Endabschnitten Vb bzw. Vc positioniert sind, die an zwei in aufeinanderfolgenden Arbeitszyklen hergestellten Vorformlingen abgequetscht werden. Dies hat zur Folge, daß jedes der aus den Endabschnitten Vc, Vb entstehenden Abfallteile 51, 53 nur einen Unterabschnitt des Laminat-Abschnittes Vv aufzunehmen braucht. Die Praxis hat gezeigt, daß die verfahrensbedingt ohnehin erforderliche Lange der Volumen-Endabschnitte Vc und Vb, aus denen die Abfallteile 51 bzw. 53 entstehen, im allgemeinen ausreicht, um die Unterabschnitte Vve, Vd und Vvs des gesamten Volumen-Abschnittes Vv aufzunehmen. Es ist ggf. aber auch möglich, die Anordndung so zu treffen, daß der gesamte gestörte Volumen-Abschnitt Vv in nur einem der beiden Abfallteile 51 oder 53 plaziert wird.

Die bezüglich der Plazierung des Volumenabschnittes Vv mit unerwünschten Eigenschaften zu beachtenden Bedingungen werden im folgenden anhand der Fig. 7a - d erläutert. Diese zeigen in stark vereinfachter Darstellung jeweils den Bereich zwischen dem der Austrittsöffnung 20 zugekehrten Ende 24b des Speicherraumes 28, welches der Position entspricht, die das freie Stirnende 38 des Ringkolbens 24 am Ende des Ausstoßhubes einnimmt, und dem unteren Ende des am Extrusionskopf 10 hängenden Vorformlings in vier unterschiedlichen Ausführungsformen a - d, deren Verbindungskanäle 39 unterschiedliche Volumen Vk aufweisen.

Die Ausführungsform gemäß Fig. 7c entspricht der Ausführungsform gemäß den Fig. 1 - 5 dahingehend, daß das Volumen Vk(c) des Verbindungskanals 39(c) gleich dem Volumen des Vorformlings 42(c), also des Volumen-Gesamtabschnittes Vp ist. Somit sind der gestörte Volumen-Unterabschnitt Vve(c) und der Volumen-Teilabschnitt Ve(c) im Vorformling 42(c) so angeordnet, daß sich der Volumen-Unterabschnitt Vve(c) im Volumen-Endabschnitt Vc befindet, aus welchem das Abfallteil 51 entsteht. Der Volumen-Teilabschnitt Ve(c) mit den beiden Unterabschnitten Vd(c) und Vvs(c) befindet sich innerhalb des Volumen-Endabschnittes Vb, aus welchem das Abfallteil 53 zwischen Formnest 48 und Extrusionskopf 10 entsteht. Die Ebene 62, innerhalb welcher die Austrittsöffnung 20 des Extrusionskopfes 10 angeordnet ist, verläuft somit bei der Ausführungsform gemäß Fig. 7c zwischen dem Volumen-Teilabschnitt Ve(c) des am Extrusionskopf 10 hängenden, den Vorformling 42(c) bildenden Volumen-Gesamtabschnitt Vp und dem Volumen-Unterabschnitt Vve(c) des im Verbindungskanal 39-(c) befindlichen Volumen-Gesamtabschnittes Vp1 für den nächstfolgenden Vorformling. Die neben den Darstellungen a - d in Fig. 7 angedeutete Blasformhälfte 47b zeigt, daß bei dieser Positionierung der zumindest teilweisen gestörten Laminatsbereiche die Ebenen x und y, in welchen die Endabschnitte Vb und Vc jeweils vom Mittelabschnitt Va, aus welchem der Artikel hergestellt wird, abgetrennt werden, einen Abstand von den in beiden Endabschnitten Vb und Vc befindlichen Unter- bzw. Teilabschnitten Vve(c) und Ve(c) aufweisen, so daß selbst dann, wenn aus irgendwelchen nicht vorhersehbaren Einflüssen die Unter- bzw. Teilabschnitte Vve(c) und Ve(c) eine etwas größere axiale Erstrekkung aufwiesen, sie immer noch innerhalb der Endabschnitte Vb bzw. Vc blieben, die Überschußmaterial, also Abfall darstellen.

In allen Fällen besteht der Volumen-Abschnitt Vv aus drei Volumen-Unterabschnitten Vvs, Vd sowie Vve, wobei die Volumen-Unterabschnitte Vvs und Vve aufgrund der in bestimmten Betriebsphasen bestehenden Druckungleichgewichte innerhalb des Extrusionskopfes 10 gestört sein können in dem Sinne, daß kein gleichmäßig ausgebildetes Laminat vorhanden ist. Zwischen beiden Unterabschnitten Vvs sowie Vve befindet sich der Unterabschnitt Vd, der im allgemeinen eine gleichmäßige Stuktur aufweisen wird, jedoch aufgrund der vorbeschriebenen unterschiedlichen Entstehungsbedingungen andere Eigenschaften aufweisen kann als das Laminat, das, abgesehen vom Unterabschnitt Vve, während des Füllhubes gebildet worden war.

Die Länge des Unterabschnitts Vd wird im wesentlichen abhängen vor der Geschwindigkeit, mit welcher der Entleerungshub des Ringkolbens 24 abläuft und damit von der Zeit, die der Entleerungshub benötigt.

Aufgrund der vorbeschriebenen Betriebsbedingungen während eines Arbeitszyklus' ergibt sich bei der Ausführungsform gemäß Fig. 7c eine ungleichmäßige Verteilung des Volumen-Teilabschnittes Vv auf die beiden Endabschnitte Vb und Vc derart, daß der Endabschnitt Vb einen verhältnismäßig großen Anteil des Volumen-Abschnittes Vv, nämlich den sich aus den beiden Unterabschnitten Vvs und Vd zusammensetzenden Teilabschnitt Ve aufnimmt, wohingegen der Endabschnitt Vc lediglich den verhältnismäßig kurzen Unterabschnitt Vve gestörten Laminats aufzunehmen hat. Dies kann z. B. dann unerwünscht sein, wenn aus irgendwelchen betrieblichen Gründen der Endabschnitt Vb kürzer ist als der Endabschnitt Vc. Wenn beide Endabschnitte, wie es häufig der Fall sein wird, etwa das gleiche Volumen und damit auch etwa die gleiche Länge aufweisen, kann es zweckmäßig sein, das Volumen Vk des Verbindungskanals 39 so zu wählen, daß die Trennebene 62 durch den Volumen-Unterabschnitt Vd hindurchgeht, so daß eine gleichmäßigere Verteilung des Volumen-Abschnittes Vv auf beide Endabschnitte Vb und Vc zweier aufeinanderfolgender Vorformlinge erfolgt. Dies kann dadurch erreicht werden, daß gemäß der Ausführungsform nach Fig. 7b das Volumen Vk(b) des Verbindungskanals 39(b) größer gewählt wird als Vp, jedoch kleiner als das zulässige Maximalvolumen Vp + Vc - Vve. Hier wird der Volumen-Abschnitt Vv(b) auf beide Endabschnitte Vb und Vc derart verteilt, daß ein Teil des Unterabschnittes Vd(b) im Endabschnitt Vc plaziert ist. Die Trennebene 62 geht durch den Unterabschnitt Vd(b) hindurch. Auch hierbei ergibt sich eine Anordnung, bei welcher die Anteile des Volumen-Abschnittes Vv(b) jeweils in einem Abstand von den Ebenen x bzw. y in den Endabschnitten Vb bzw. Vc positioniert sind, wobei jedoch die Abstände geringere Unterschiede voneinander aufweisen als im Falle der Ausführungsform gemäß Fig. 7c. Das gegenüber der Ausführungsform der Fig. 7c größere Volumen des Verbindungskanals Vk(b) hat somit zur Folge, daß das während eines Entleerungshubes gebildete Laminat den Verbindungskanal 39(b) nicht völlig ausfüllt. Vielmehr bleibt am Ende des Entleerungshubes ein kurzer Abschnitt des im vorangegangenen Arbeitszyklus' gebildeten Volumen-Gesamtabschnittes im Verbindungskanal 39(b) mit der bereits erwähnten Folge, daß die Trennebene 62 durch den während des vorangegangenen Entleerungshubes gebildeten Volumen-Unterabschnitt Vd(b) verläuft.

Der Verbindungskanal 39(a) der Ausführungsform gemäß Fig. 7a weist ein noch größeres Volumen Vk(a) auf als der Verbindungskanal Vk(b), da Vk(a) gleich Vp + Vc - Vve ist. Es entspricht somit einer Grenzbedingung, nämlich der maximal zulässigen Größe für Vk mit der Folge, daß der Endabschnitt Vc des Vorformlings 42(a) nahezu vollständig aus dem Volumen-Abschnitt Vv(a) besteht und die Grenze zwischen diesem Abschnitt Vv(a) und dem Volumen-Mittelabschnitt Va, aus dem der Artikel herzustellen ist, in der Ebene y liegt, in welcher der Endabschnitt Vc unter Bildung des Abfallstükkes 51 durch die Abquetschkanten 50a, 50b vom Mittelabschnitt Va abgequetscht wird. Im Endabschnitt Vb des Vorformlings 42(a) ist bei dieser Dimensionierung des Verbindungskanals 39(a) überhaupt kein Laminat aus dem Abschnitt Vv(a) vorhanden.

Die Ausführungsform gemäß Fig. 7a läßt erkennen, daß bei Überschreiten des zulässigen Maximalvolumens Vp + Vc - Vve für Vk ein Teilbereich des Volumen-Abschnittes Vv über den unteren Endabschnitt Vc in den Mittelabschnitt Va hineinragen würde.

Bei der Ausführungsform gemäß Fig. 7d ist das Volumen Vk(d) des Verbindungskanals 39(d) kleiner als bei der Ausführungsform c. Das Volumen Vk(d) genügt jedoch noch der Bedingung Vk ≥ Va + Vc + Ve, welche das zulässige Mindestvolumen Vk des Verbindungskanals 39 definiert. Tatsächlich entspricht das Volumen Vk(d) der minimalen Grenzbedingung bezüglich des Mindestvolumens für Vk mit der Folge, daß der gesamte Volumen-Abschnitt Vv(d) in nur einem Volumen-Endabschnitt, nämlich dem Volumen-Endabschnitt Vb des Vorformlings 42(d) positioniert ist. Aus dem Volumen-Endabschnitt Vb entsteht das zwischen Blasformnest und Extrusionskopf 10 befindliche Abfallstück 53. Auch die Art der Positionierung des Volumen-Abschnittes Vv(d) innerhalb des Endabschnittes Vb zeigt, daß die Ausführungsform gemäß Fig. 7d eine Grenzbedingung erfüllt, da die Grenze zwischen dem Volumen-Abschnitt Vv(d) bzw. dessen Volumen-Unterabschnitt Vve(d) einerseits und dem Volumen-Mittelabschnitt Va, aus welchem der Artikel hergestellt wird, mit der Ebene x zusammenfällt, in welcher die Abquetschkanten 49a, 49b der Blasform 47 den Endabschnitt Vb unter Bildung des Abfallteiles 53 vom Mittelabschnitt Va abquetschen. Das gegenüber der Ausführungsform gemäß Fig. 7c kleinere Volumen des Verbindungskanals 39(d) hat zur Folge, daß ein Teil des während des - bei allen Ausführungsformen a - f gleichen - Entleerungshubes im Verbindungskanal gebildeten Laminats über die Ebene 62 hinaus in den bei demselben Entleerungshub gebildeten Vorformling 42(d) vorbewegt wird. Bei Unterschreiten des zulässigen Minimalvolumens Va + Vc + Ve für Vk würde ein Teilbereich des Volumen-Abschnittes Vv über den Endabschnitt Vb in den Mittelabschnitt Va hineinragen, aus welchem der Artikel innerhalb der Blasform 47 hergestellt wird.

Die Ausführungsformen a und b der Fig. 7 zeigen, daß mit zunehmendem Volumen Vk des Verbindungskanals 39 der Anteil des Volumen-Abschnittes Vv, der sich im Volumen-Endabschnitt Vc an dem der Austrittsöffnung 20 des Extrusionskopfes 10 abgekehrten Ende des Vorformlings befindet, größer wird. Die Ausführungsform gemäß Fig. 7d zeigt, daß mit abnehmendem Volumen Vk des Verbindungskanals 39 der Anteil des Volumen-Abschnittes Vv, der sich in der Austrittsöffnung 20 zugekehrten Endabschnitt Vb befindet, zunimmt. Dies gilt in beiden Fällen, solange die Position des Volumen-Abschnittes Vv nicht über die Ebene y bzw. x in den jeweils zugehörigen Mittelabschnitt Va hineinragt.

Wenn vorstehend gesagt wird, daß bei Vk = Vp in der durch die Austrittsöffnung 20 definierten Trennebene 62 der gesamte Volumen-Abschnitt Vv derart getrennt wird, daß der Volumen-Teilabschnitt Ve Bestandteil des am Extrusionskopf 10 hängenden Vorformlings 42 ist, während der Volumen-Unterabschnitt Vve in dem unmittelbar an die Austrittsöffnung 20 anschließenden Bereich des Verbindungskanals 39 bleibt und somit Bestandteil des bis zum nächsten Arbeitszyklus im Verbindungskanal 39 befindlichen Volumen-Gesamtabschnittes Vp1 bzw. Vpx ist, handelt es sich hierbei um eine ggf. etwas idealisierte Beschreibung des Sachverhaltes, da aufgrund des plastischen Zustandes des die einzelnen Gesamtabschnitte bildenden Materials gewisse unkontrollierbare Dimensionsschwankungen desselben, insbesondere im Bereich der Austrittsöffnung 20, z. B. aufgrund des Quellverhaltens des Kunststoffes, unvermeidbar sind, die dazu führen können, daß sich die relative Lage der einzelnen Abschnitte zur Austrittsöffnung 20 und damit zur Trennebene 62 etwas ändert. Entsprechendes gilt natürlich auch für die Lage des am Extrusionskopf 10 hängenden Vorformlings relativ zur Blasform 47 und zu den Abquetschkanten 49a, 49b derselben. Diese Änderungen sind jedoch bei normalen Betriebsbedingungen so gering, daß sie nicht ins Gewicht fallen, jedenfalls die praktische Anwendung der Erfindung nicht beeinträchtigen. Letzteres gilt auch für die Position des Volumen-Abschnittes Vv bzw. dessen Unterabschnitte relativ zur Blasform 47, zumal, wie insbesondere die in Fig. 7 dargestellten Ausführungsformen erkennen lassen, die Endabschnitte Vb und Vc, aus denen die Abfallteile 53 und 51 entstehen, normalerweise ein Volumen und damit eine axiale Erstreckung aufweisen, die es ohne weiteres ermöglichen, den Volumen-Abschnitt Vv in den Volumen-Endabschnitten Vb und Vc jeweils so zu plazieren, daß er einen Abstand von der jeweils benachbarten Ebene x bzw. y aufweist, der auch bei einer geringfügigen axialen Verschiebung des Vorformlings 42 zur Blasform 47 eine Gewähr dafür gibt, daß der Volumen-Abschnitt Vv bzw. dessen Unterabschnitte außerhalb des Volumen-Mittelabschnittes Va bleibt bzw. bleiben, aus dem das Endprodukt hergestellt wird.

Da der Volumenabschnitt Vv auch den Volumen-Teilabschnitt Ve enthält, dessen Länge abhängt von dem Volumen des während des Ausstoßhubes hinzuextrudierten Materials, ergibt sich eine Abhängigkeit der Länge des Volumen-Teilabschnittes Ve und damit des Volumen-Abschnittes Vv von der Zeit, die der Entleerungshub in Anspruch nimmt und der Materialmenge, die pro Zeiteinheit von den Extrudern in den Extrusionskopf 10 gefördert wird. Diese betrieblichen Größen hängen im allgemeinen ab von Bedingungen, z. B. Eigenschaften des Kunststoffes sowie Produktivität des Verfahrens zur Herstellung der Artikel, die die Länge der Laminatabschnitte Vv unberücksichtigt lassen. So wird bei Vergrößerung der Produktivität, also des Durchsatzes an Kunststoff pro Zeiteinheit, einer Extrusionseinheit bei ansonsten gleichen Bedingungen der Volumen-Abschnitt Vv länger. Die Erfindung bietet die Möglichkeit, einem solchen Sachverhalt dadurch Rechnung zu tragen, daß der Volumen-Abschnitt Vv auf beide Volumen-Endabschnitte Vb und Vc, die aus betrieblichen Gründen ohnehin erforderlich sind, so verteilt werden, daß beide Volumen-Endabschnitte zur Unterbringung der gestörten Volumen-Unterabschnitte Vve und Vvs und des dazwischen befindlichen Volumen-Unterabschnittes Vd in optimaler Weise genutzt werden. Insbesondere besteht die Möglichkeit, die in den einzelnen Volumen-Endabschnitten unterzubringenden Teile des Volumenabschnittes Vv durch entsprechende Wahl des Volumens Vk des Verbindungskanals 39 an die Volumen und damit die axiale Erstreckung der Volumen-Endabschnitte Vb und Vc anzupassen.

Das schließt natürlich die Möglichkeit nicht aus, daß in Ausnahmefällen der Volumen-Abschnitt Vv ein Volumen und damit eine Länge aufweist, die größer sind als das erforderliche Volumen und damit die Gesamtlänge der Volumen-Endabschnitte Vb und Vc. In derartigen Fällen müßte zur Erzielung des angestrebten Effektes, also zur Vermeidung des Vorhandenseins von Laminat mit unerwünschten Eigenschaften im Volumen-Mittelabschnitt Va, zumindest einer der Volumen-Endabschnitte Vb und Vc mehr Volumen aufweisen und damit länger sein als betrieblich erforderlich wäre. Auch hierbei würde die Lehre gemäß der Erfindung die Möglichkeit der optimalen Nutzung der Volumen-Endabschnitte ermöglichen derart, daß deren Volumen und damit deren Länge nicht größer zu sein brauchen als für die Unterbringung des Volumen-Abschnittes Vv unbedingt erforderlich.

Es war bereits erläutert worden, daß beim Ausführungsbeispiel gemäß der Fig. 5 der Verbindungskanal 39 begrenzt wird durch den Speicherraum 28, d.h. durch den Ringkolben 24 in seiner der Austrittsöffnung 20 des Extrusionskopfes 10 zugekehrten Endlage 24b einerseits und durch die Austrittsöffnung 20 andererseits. Mithin ist das Volumen Vk des Verbindungskanals 39 einstellbar durch entsprechende Positionierung des Hubbereiches des Ringkolbens 24 und somit der Endlage 24b desselben. Hierbei ist davon auszugehen, daß normalerweise das gesamte im Extrusionskopf 10 verfügbare Speicherraum-Volumen größer ist als das Volumen, welches zur Herstellung eines bestimmten Vorformlings 42 benötigt wird. Somit ist bei Fertigung eines bestimmten Artikels der Hub des Ringkolbens 24 normalerweise kürzer als die axiale Erstreckung des insgesamt zum Speichern von Material verfügbaren Volumens. Dies bedeutet, daß normalerweise der Ringkolben 24 sich immer nur über einen Teilbereich der axialen Erstreckung des insgesamt als Speicherraum verfügbaren Volumens bewegt, wobei der Hub des Ringkolbens 24 in Abhängigkeit von seiner Größe das erforderliche Volumen Vs und in Abhängigkeit von der Plazierung seiner beiden Endpositionen 24a und 24b die Position des jeweils genutzten Speicherraumes 28 innerhalb des im Extrusionskopf 10 vorhandenen maximalen Speichervolumens bestimmt.

Unter der Voraussetzung, daß der effektiv genutzte Speicherraum 28 kleiner ist als das vorhandene maximale Speichervolumen, besteht somit die Möglichkeit, ohne Änderung des Volumens des Speicherraumes 28 das Volumen Vk des Verbindungskanals 39 zu ändern, indem der Hub des Ringkolbens 24 so gelegt wird, daß der Abstand zwischen der der Austrittsöffnung 20 zugekehrten Endposition 24b einerseits und der Austrittsöffnung 20 andererseits zu dem gewünschten Volumen Vk des Verbindungskanals 39 führt. Daraus ergibt sich dann auch die der Austrittsöffnung 20 abgekehrte Endposition 24a.

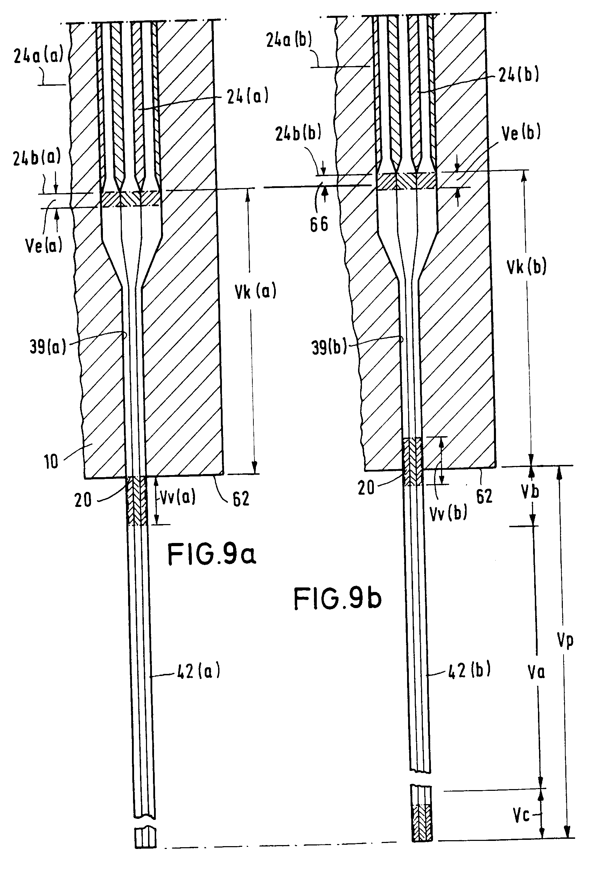

Diese Möglichkeit, das Volumen Vk des Verbindungskanals 39 durch entsprechende Positionierung der Endpunkte 24a, 24b des Kolbenhubes einzustellen, sei im folgenden anhand der Fig. 9a und b erläutert. Die Position der Endpunkte 24a(a) und 24b(a) des Hubs des Ringkolbens 24(a) bei der Ausführungsform gemäß Fig. 9a entspricht der Lage der entsprechenden Umkehrpunkte 24a, 24b des Ringkolbens 24 der Fig. 4. Dabei ergibt sich ein Volumen Vk(a) des Verbindungskanals 39(a), welches etwas kleiner ist als das Volumen Vk(c) des Ausführungsbeispiels gemäß Fig. 7a und etwas größer ist als das Volumen Vk(d) des Ausführungsbeispiels gemäß Fig. 7d. Dies zeigt ein Vergleich der Positionen des Volumen-Abschnitts Vv der einzelnen Ausführungsformen. Der Volumenabschnitt Vv(a) der Ausführungsform gemäß Fig. 9a ist so positioniert, daß die dem Ringkolben 24(a) zugekehrte Begrenzung des Volumen-Abschnittes Vv(a) in der Ebene 62 verläuft, in welcher die Austrittsöffnung 20 liegt. D. h., daß der Volumen-Abschnitt Vv(a) ausschließlich im Volumen-Endabschnitt Vb plaziert ist.

Bei der Anordnung gemäß Fig. 9b sind die Endpunkte 24a(b) und 24b(b) der Hubbewegungen des Ringkolbens 24(b) so angeordnet, daß sie bei gegenüber Fig. 9a unverändertem Abstand voneinander, also gleichem Kolbenhub, in einem Abstand von der Trennebene 62 und damit der Austrittsöffnung 20 angeordnet sind, der jeweils um die Distanz 66 größer ist als im Falle der Anordnung gemäß Fig. 9a. Somit ist auch das Volumen Vk(b) des Verbindungskanals 39(b) entsprechend größer als das Volumen Vk(a) des Verbindungskanals 39(a) mit der Folge, daß der Volumen-Abschnitt Vv(b) relativ zur Trennebene 62 anders, nämlich so positioniert ist, daß die Trennebene 62 durch den Volumen-Abschnitt Vv(b) hindurchgeht. Bei dieser Bemessung von Vk(b), die etwa dem Volumen Vk(b) der Ausführungsform gemäß Fig. 7b entspricht, wird der Volumen-Abschnitt Vv(b) auf die Volumen-Endabschnitte Vb und Vc des Vorformlings 42(b) mit dem Gesamtvolumen Vp verteilt. Durch entsprechende Einstellung der Positionen von Endpunkt 24a und Endpunkt 24b des vom Ringkolben 24 ausgeführten Hubes lassen sich somit Vk und damit die Positionen der Volumen-Abschnitte Vv entsprechend den jeweiligen Erfordernissen einstellen.

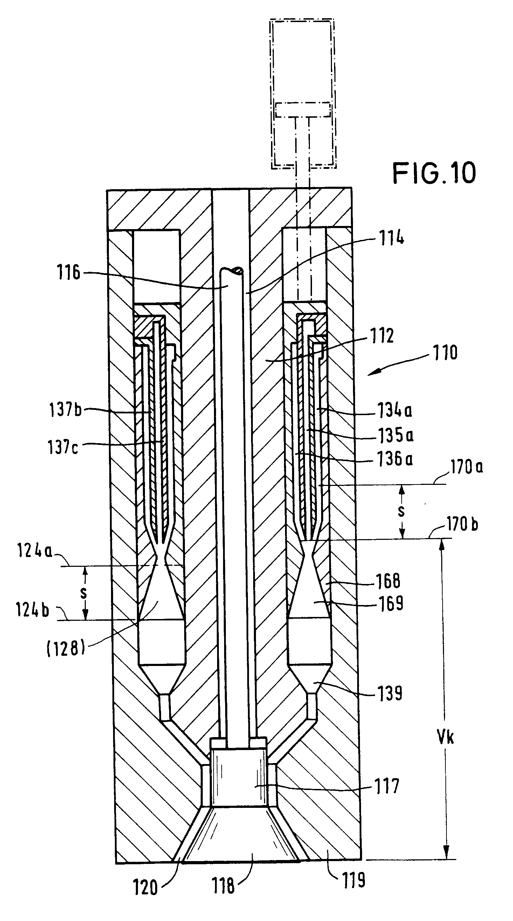

Fig.10 zeigt eine andere Ausführungsform eines Extrusionskopfes in einer der Fig. 1 entsprechenden Darstellung. Die Teile, die denen der Ausführungsform gemäß Fig. 1 entsprechen, sind mit gleichen, jedoch um 100 höheren Bezugszeichen versehen.

Der Extrusionskopf 110 des Ausführungsbeispiels gemäß Fig. 10 weist ein Gehäuse 111 auf, innerhalb dessen in einem Abstand und zum Gehäuse 111 koaxial ein Kern 112 angeordnet ist, der mit einer axialen Bohrung 114 versehen ist. Letztere dient zur Aufnahme einer darin in Längsrichtung des Extrusionskopfes 110 hin- und herbewegbaren Stange 116, die an ihrem einen Ende ein Führungsteil 117 trägt. An letzterem ist ein Düsenkern 118 angebracht, der gemeinsam mit dem ihn umgebenden Bereich 119 des Gehäuses 110 eine Austrittsöffnung 120 begrenzt.

Innerhalb des Extrusionskopfes 110 ist ein zum Kern 112 koaxialer, im Querschnitt ringförmiger Speicherraum 128 vorgesehen, dem ein axial hin- und herverschiebbarer Ringkolben 124 zugeordnet ist. Der Extrusionskopf 110 ist ebenfalls mit drei in der Zeichnung nicht dargestellten Extrudern verbunden, die in geeigneter Weise mit innerhalb des Ringkolbens 124 angeordneten Kanalsystemen verbunden sind. Diese weisen ebenfalls Verteilerkanäle und Ringkanäle auf, die denen des in Fig. 1 dargestellten Extrusionskopfes 10 entsprechen.

Der wesentliche Unterschied zwischen beiden Ausführungsformen besteht darin, daß bei der Ausführungsform gemäß Fig. 10 der Laminatbildungsbereich sich innerhalb des Kolbens 124 befindet, der an seinem der Austrittsöffnung 120 zugekehrten Ende mit einem Fortsatz 168 versehen ist. Letzterer weist einen in Fließrichtung des Materials sich gleichmäßig erweiternden Ringkanal 169 auf, durch den das innerhalb des Ringkolbens 124 gebildete Laminat in den Speicherraum 128 fließt.

Das Laminat bildet sich innerhalb des Ringkolbens 124 bei Austritt aus den Ringkanälen 134a, 135a, 136a, also unmittelbar nach Passieren der unteren Enden der die Ringkanäle 134a, 135a, 136a begrenzenden Trennwände 137b, 137c. Der Einfachheit halber wird bei dem in Fig. 10 der Zeichnung dargestellten Ausführungsbeispiel angenommen, daß diese Enden eine Ebene definieren, in welcher die Bildung des Laminats aus den die Ringkanäle 134a, 135a, 136a erfolgt. Bei den Hin- und Herbewegungen des Ringkolbens 124 zwischen seinen beiden Endpositionen 124a und 124b, die den Hub s begrenzen, bewegt sich diese Ebene zwischen den beiden Positionen 170a und 170b. Das Volumen Vk des Verbindungskanals 139, zu dein beim Ausführungsbeispiel gemäß Fig. 10 auch der Ringkanal 169 innerhalb des Fortsatzes 168 des Ringkolbens 124 gehört, bemißt sich somit aus dem Volumen des in vorstehender Weise definierten Verbindungskanals zwischen der Ebene 170b und der Austrittsöffnung 120. Im übrigen gelten die vorstehend im Zusammenhang mit dem Ausführungsbeispiel gemäß den Fig. 1 bis 9 beschriebenen Voraussetzungen und Bedingungen.

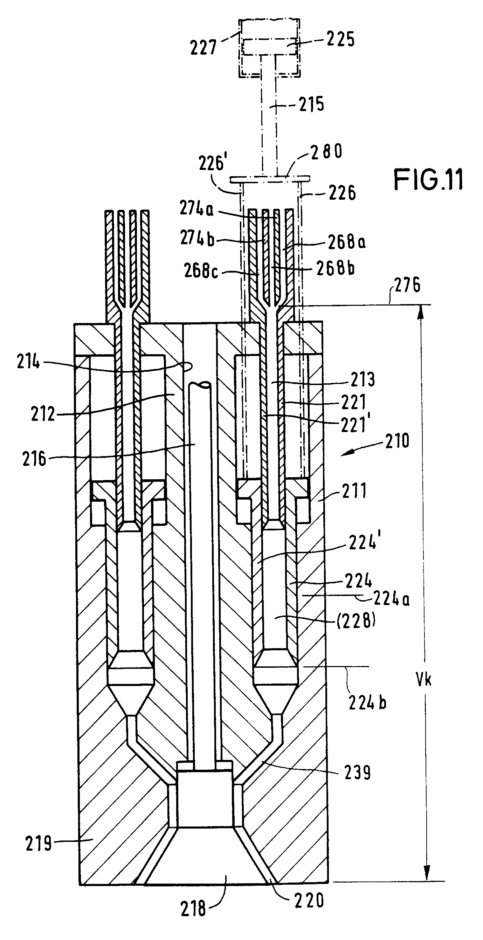

Das Ausführungsbeispiel gemäß Fig. 11 unterscheidet sich von sämtlichen anderen Ausführungsformen dadurch, daß der Laminatbildungsbereich nicht mit dem Ringkolben bei dessen Hubbewegungen zwischen den beiden Endpositionen 224a, 224b hin- und herbewegt wird, sondern stationär ist. Dem Extrusionskopf des Ausführungsbeispiels gemäß den Fig. 1 -5 entsprechende Teile sind mit gleichen, jeweils um 200 höheren Bezugszeichen versehen. Der Extrusionskopf 210 ist mit einem Gehäuse 211 versehen, innerhalb dessen in einem Abstand und dazu koaxial ein Kern 212 angeordnet ist, welcher mit einer axialen Bohrung 214 versehen ist. Diese dient zur Aufnahme einer darin in Längsrichtung des Extrusionskopfes 210 hin- und herbewegbaren Stange 216, die an ihrem einen Ende einen Düsenkern 218 trägt. Dieser begrenzt gemeinsam mit dem ihn umgebenden Bereich 219 des Gehäuses eine Austrittsöffnung 220.

Innerhalb des Extrusionskopfes 210 ist ein Speicherraum 228 vorhanden, dem eine zweiteilige Ringkolbeneinheit zugeordnet ist. Die beiden einen radialen Abstand voneinander aufweisenden, zueinander koaxialen Ringkolben 224, 224' sind mit Kolbenstangen 226 bzw. 226' versehen. Die Kolbenstangen sind durch eine gemeinsame Traverse 280 miteinander verbunden. Diese Traverse ist über weitere Kolbenstangen 215 mit einem Kolben 225 verbunden, der in einem hydraulischen Zylinder 227 geführt ist. Somit stellen die beiden Ringkolben 224, 224' eine Einheit dar, da sie gemeinsam zwischen den beiden Endpositionen 224a und 224b hin- und herbewegt werden.

Die vorbeschriebene Ausgestaltung mit zwei Ringkolben 224, 224' ist erforderlich, um im oberen Bereich der beiden Ringkolben 224, 224' zwischen diesen zwei einen Ringkanal 213 begrenzende ringförmige Einsätze 221, 221' zueinander koaxial anzuordnen. Der Ringkanal 213 stellt die Verbindung her zwischen drei zueinander koaxialen Ringkanälen 268a, 268b, 268c einerseits und dem Speicherraum 228 andererseits. Durch die Ringkanäle 268a, 268b, 268c wird von drei in der Zeichnung nicht dargestellten Extrudern, mit denen der Extrusionskopf 210 verbunden ist, Kunststoffmaterial in den Ringkanal 213 geführt. Die drei durch die Ringkanäle 268a, 268b, 268c, die bezüglich ihrer Funktion den Ringkanälen 34a, 35a, 36a des Ausführungsbeispiels gemäß den Fig. 1 - 5 entsprechen, getrennt zugeführten Materialströme verbinden sich am oberen Ende des Sammelkanals 213 zum Laminat, welches durch den Sammelkanal in Richtung auf den Speicherraum 228 fließt. Der Laminatbildungsbereich liegt in Fließrichtung unmittelbar hinter den freien Enden der die Ringkanäle 268a, 268b, 268c begrenzenden Trennwände 274a, 274b.

Das durch den Sammelkanal 213 in Richtung auf die Austrittsöffnung 220 strömende Laminat verdrängt die dem Speicherraum 228 zugeordneten Ringkolben 224, 224' aus der unteren Endlage 224b in die obere Endlage 224a, wobei gleichzeitig der Speicherraum 228 gefüllt wird. Nach Erreichen der oberen Endlage 224a werden die Ringkolben 224, 224' durch entsprechende Betätigung des Kolbens 225 nach unten in die Endlage 224b verschoben, wobei zugleich das im Speicherraum 228 befindliche Laminat in Richtung auf die Austrittsöffnung 220 verdrängt wird.

Das Volumen Vk zwischen dem Laminatbildungsbereich, der bei der Ausführungsform gemäß Fig. 11 als etwa in der Ebene 276 liegend angenommen wird, in welcher die Enden der Trennwände 274a, 274b verlaufen, und der Austrittsöffnung 220 ergibt sich bei der Ausführungsform gemäß Fig. 11 aus dem Volumen des Kanals 239, dem Volumen des Ringkanals 213 und dem Volumen, das von beiden Ringkolben 224, 224' in deren Endposition 224b begrenzt ist. Zum Erreichen des durch die Erfindung angestrebten Effektes ist es auch bei der Ausführungsform gemäß Fig. 11 erforderlich, daß die das Volumen Vk betreffenden Bedingungen erfüllt sind, wenn die Kolben 224, 224' ihre der Austrittsöffnung 220 zugekehrte Endlage 224b einnehmen, also bei durch die Kolben 224, 224' entleertem Speicherraum. Wenn das so definierte Volumen Vk den vorbeschriebenen Bedingungen genügt, ist auch bei dem Speicherkopf 210 gemäß Fig. 11 eine Plazierung des Volumen-Abschnittes Vv innerhalb wenigstens eines der Volumen-Endabschnitte Vb, Vc des einen Vorformling bildenden Volumen-Gesamtabschnittes möglich mit dem Ergebnis, daß keine Teile des Laminats mit unregelmäßiger Struktur oder sonstigen Abweichungen von der Soll-Beschaffenheit in den Volumen-Mittelabschnitt Va gelangen, aus dem der Hohlkörper 57 hergestellt wird.

Die Einstellung des Volumens Vk ist bei allen Ausführungsbeispielen durch Einstellen des Bereiches möglich, innerhalb dessen die Ringkolben 24; 124; 224, 224' ihre Hubbewegungen ausführen.

Wenngleich in den Zeichnungen beispielhaft nur Ausführungsformen mit einem dreischichtigen Laminat dargestellt sind, ist die Erfindung keinesfalls darauf beschränkt. Vielmehr ist sie auch anwendbar bei Laminaten mit einer anderen Anzahl von Schichten.

**Patentansprüche**

1.  Verfahren zum Herstellen von Hohlkörpern (57) aus thermoplastischem Kunststoff, deren Wandung aus wenigstens zwei Schichten aufweisenden Laminat besteht, mittels Extrusionsblasformen, bei welchem Verfahren zunächst Vorformlinge (42), deren Wandung eine entsprechende Anzahl von Schichten aufweist, absatzweise hergestellt werden unter Verwendung einer Extrusionseinheit, die wenigstens zwei kontinuierlich laufende Extruder und einen gemeinsamen Extrusionskopf (10) aufweist, wobei die Extrusionseinheit mit einem Speicherraum (28) zum Speichern von in den Extrudern plastifizierten Materialien und mit zwischen zwei Endpositionen (24a, 24b) hubartig hin- und herbewegbaren Mitteln (24) zum Entleeren dieses Speicherraumes (28) zur Bildung eines Vorformlings (42) versehen ist und Materialströme, deren Anzahl der Anzahl der Schichten in der Wandung des Hohlkörpers (57) entspricht, im Bereich des Extrusionskopfs (10) derart zusammengeführt werden, daß einander benachbarte Materialströme in einem Laminatbildungsbereich miteinander zu einem Laminat für die Wandung des Vorformlings (42) verbunden werden, welches Laminat durch einen Verbindungskanal (39) innerhalb des Extrusionskopfes (10) zu der in einem Abstand vom Speicherraum (28) befindlichen Austrittsöffnung (20) vorbewegt wird, und aus der Austrittsöffnung (20) ein Gesamt-Volumenabschnitt (Vp) des Laminats zur Bildung des Vorformlings ausgestossen wird, der zwei Volumen-Endabschnitte (Vb, Vc) und einen Volumen-Mittelabschnitt (Va) aufweist, wobei zumindest ein Teilbereich des Volumen-Mittelabschnittes (Va) innerhalb des Formnestes (48) einer unterteilten Blasform (47) unter innerem Überdruck aufgeweitet wird und die Endabschnitte (Vb, Vc) des Volumen-Gesamtabschnitts Vp als Überschußmaterial (51, 52) durch einen Abquetschvorgang abgequetscht werden, an welchem Blasformteile (47a, 47b) teilnehmen, und das Überschußmaterial (51, 52) außerhalb des Formnestes (48) verbleibt, dadurch gekennzeichnet, daß das Laminat nach seiner Bildung in dem Speicherraum gespeichert wird und das Volumen (Vk) des Verbindungskanals (39) zwischen Laminatbildungsbereich und Austrittsöffnung (20) zu dem Zeitpunkt, zu welchem die Mittel (24) zum Entleeren des Speicherraumes (28) ihre Position (24b) am Ende des Entleerungshubes einnehmen, so bemessen wird, daß bei einem vorgegebenen Volumen des einen Vorformling (42) bildenden Volumen-Gesamtabschnitts (Vp) das Material zur Herstellung eines Hohlkörpers nach Verlassen des Speicherraums (28) während der Dauer wenigstens eines Arbeitszyklus' noch im Extrusionskopf (10) verbleibt und ein Volumen-Abschnitt (Vv) zumindest teilweise gestörten Laminats, der am Ende des Entleerungshubes und/oder am Anfang des Füllhubes und am Anfang des Entleerungshubes der Mittel (24) zum Entleeren des Speicherraums (28) nahe dem Laminatbildungsbereich einschließlich des während des Entleerungshubes in den Extrusionskopf (10) hinein extrudierten Materials entsteht, sich in wenigstens einem der Volumen-Endabschnitte (Vb, Vc) befindet, die von dem den extrudierten Vorformling (42) bildenden Volumen-Gesamtabschnitt (Vp) abgequetscht werden und außerhalb des Formnestes der Blasform (47) bleiben, wenn wenigstens ein Teilbereich des Volumen-Mittelabschnittes (Va) im Formnest (48) der Blasform (47) aufgeweitet wird.

2.  Verfahren nach Anspruch 1, dadurch gekennzeichnet, daß das Volumen (Vk) des Verbindungskanals (39) zwischen dem Laminatbildungsbereich und der Austrittsöffnung (20) zu dem Zeitpunkt, zu welchen die Mittel (24) zum Entleeren des Speicherraumes(28) ihre Position (24b) am Ende des Entleerungshubes einnehmen,

a) nicht kleiner ist als die Summe des Volumens aus dem Volumen-Mittelabschnitt (Va) und dem in Fließrichtung des Materials vorderen Volumen-Endabschnitt (Vc) und dem Volumen-Abschnitt (Ve), der während des Entleerungshubes aus den Extrudern in den Extrusionskopf (10) hineingefördert wird, und

b) nicht größer ist als die Summe des Volumens aus dem einen Vorformling bildenden Volumen-Gesamtabschnitt (Vp) und dem in Fließrichtung des Materials vorderen Volumen-Endabschnittes (Vc) abzüglich des Volumen-Unterabschnittes (Vve) gestörten Laminats, der zu Beginn des Füllhubes entsteht, wobei

c) die Summe der Volumen des Volumen-Teilabschnitts (Ve), der während des Entleerungshubes aus den Extrudern in den Extrusionskopf hineingefördert wird, und des Volumen-Unterabschnitts gestörten Laminats, der zu Beginn des Füllhubes entsteht, nicht größer ist als die Summe der Volumen beider Volumen-Endabschnitte (Vb, Vc) des Volumen-Gesamtabschnittes (Vp) eines Vorformlings.

3. Verfahren nach Anspruch 2, dadurch gekennzeichnet, daß das Volumen (Vk) des Verbindungskanals (39) zwischen Laminatbildungsbereich und der Austrittsöffnung(20) zu dem Zeitpunkt, zu welchem die Mittel (24) zum Entleeren des Speicherraumes(28) ihre Position (24b) am Ende des Entleerungshubes einnehmen, so bemessen wird, daß es gleich dem Volumen (Vp) eines Vorformlings ist.

4. Verfahren nach Anspruch 2 oder 3, dadurch gekennzeichnet, daß das Volumen (Vk) des Verbindungskanals (39) zwischen Laminatbildungsbereich und der Austrittsöffnung (20) zu dem Zeitpunkt, zu welchem die Mittel (24) zum Entleeren des Speicherraums (28) ihre Position (24b) am Ende des Entleerungshubes einnehmen, so bemessen wird, daß es den Bedingungen gemäß den Merkmalen a) und b) des Anspruches 2 zuzüglich dem Volumen eines Volumen-Gesamtabschnittes (Vp) oder einem ganzzahligen Vielfachen des letzteren entspricht.

5. Verfahren nach Anspruch 1, dadurch gekennzeichnet, daß der Volumen-Abschnitt zumindest teilweise gestörten Laminats auf zwei benachbarte Volumen-Endabschnitte Vb, Vc zweier aufeinanderfolgender Vorformlinge (42) verteilt wird.

6. Verfahren nach Anspruch 1, dadurch gekennzeichnet, daß die Materialien für die das Laminat (40) bildenden Schichten (40a, 40b, 40c) durch die Mittel (24) zum Entleeren des Speicherraumes (28) hindurch in den Speicherraum (28) fließen und der Laminatbildungsbereich während des Füllhubs und während des Entleerungshubes innerhalb des Extrusionskopfes (10) entsprechend den Bewegungen der Mittel (24) zum Entleeren des Speicherraumes (28) sich hin- und herbewegt.

7. Verfahren nach Anspruch 1, dadurch gekennzeichnet, daß der Laminatbildungsbereich stationär ist.

8. Vorrichtung zum Herstellen von Hohlkörpern (57) aus thermoplastischem Kunststoff, deren Wandung aus einem wenigstens zwei Schichten aufweisenden Laminat besteht, durch Extrusions-Blasformen mit einer Extrusionseinheit, die wenigstens zwei Extruder und einen gemeinsamen Extrusionskopf (10) mit einer ringförmigen Austrittsöffnung (20) aufweist, wobei die Extrusionseinheit mit einem Speicherraum (28) zum Speichern des in den Extrudern plastifizierten Materials und mit zwischen zwei Endpositionen (24a, 24b) hubartig hin- und herbewegbaren Mitteln (24) zum Entleeren des Speicherraums (28) zur Bildung eines Vorformlings (42) versehenist und die Vorrichtung wenigstens eine geteilte, mit Abquetschkanten (49a, 49b; 50a, 50b) versehene Blasform (47) mit wenigstens einem Formnest (48) aufweist, innerhalb dessen zumindest ein Teilbereich des Mittelabschnitts (Va) des Vorformlings (42) unter innerem Überdruck zum Hohlkörper (57) aufgeweitet wird, und an beiden Enden des Mittelabschnittes (Va) jeweils ein Endabschnitt (Vb, Vc) als Überschußmaterial (51, 53) abgequetscht wird und innerhalb des Extrusionskopfes (10) wenigstens ein Laminatbildungsbereich vorhanden ist, in welchem die Materialströme für die einzelnen Schichten (40a, 40b, 40c) zur Bildung des Laminats (40) miteinander verbunden werden, und der Laminatbildungsbereich über einen Verbindungskanal (39), durch welchen das Laminat in Richtung auf die Austrittsöffnung (20) fließt, mit letzterer verbunden ist, dadurch gekennzeichnet, daß das Volumen (Vk) des Verbindungskanals (39) zwischen dem Bildungsbereich des Laminats, das nach seiner Bildung im Speicherraum gespeichert wird, und der Austrittsöffnung (20) zu dem Zeitpunkt, zu welchem die Mittel (24) zum Entleeren des Speicherraumes (28) ihre Position (24b) am Ende des Entleerungshubes einnehmen, so bemessen ist, daß bei einem vorgegebenen Volumen des einen Vorformling (42) bildenden Volumen-Gesamtabschnittes (Vp) das Material zur Herstellung eines Hohlkörpers nach Verlassen des Speicherraumes (28) während der Dauer wenigstens eines Arbeitszyklus' noch im Extrusionskopf (20) verbleibt und ein Volumenabschnitt (Vv) zumindest teilweise gestörten Laminats, der am Ende des Entleerungshubs und/oder am Anfang des Füllhubes und am Anfang des Entleerungshubes der Mittel (24) zum Entleeren des Speicherraums (28) nahe dem Laminatbildungsbereich einschließlich des während des Entleerungshubes in den Extrusionskopf (10) hinein extrudierten Materials entsteht, sich in wenigstens einem der Volumen-Endabschnitte (Vb, Vc) befindet, die von dem den extrudierten Vorformling (42) bildenden Gesamtabschnitt (Vb) abgequetscht werden und außerhalb des Formnestes der Blasform (47) bleiben, wenn wenigstens ein Teilbereich des Volumen-Mittelabschnittes (Va) im Formnest (48) der Blasform (47) aufgeweitet wird.

9. Vorrichtung nach Anspruch 8, dadurch gekennzeichnet, daß das Volumen (Vk) des Verbindungskanals(39) zwischen dem Laminatbildungsbereich und der Austrittsöffnung (20) zu dem Zeitpunkt, zu welchem die Mittel (24) zum Entleeren des Speicherraums (28) ihre Position am Ende des Entleerungshubes einnehmen, folgenden Bedingungen genügt:

$$Vk \geq n \cdot Vp - Vb + Ve \text{ und}$$
$$Vk \leq n \cdot Vp + Vc - Vve,$$

wobei n = 1 oder ein ganzzahliges Vielfaches von 1,

Vp der den Vorformling bildende Volumen-Gesamtabschnitt,

Vb der in Fließrichtung des Laminats hintere abzuquetschende Volumen-Endabschnitt,

Vc der in Fließrichtung des Laminats vordere abzuquetschende Volumen-Endabschnitt,

Ve der während des Entleerens des Speicherraumes bei kontinuierlichem Arbeiten der Extruder von diesen in den Extrusionskopf geförderte Volumenanteil und

Vve der in Fließrichtung des Laminats hintere Volumen-Teilabschnitt gestörten Laminats, der nach Beginn des Füllhubes gebildet wird, ist

und die zusätzliche Bedingung gilt, daß

$$Vv = Ve + Vve \leq Vb + Vc.$$

10. Vorrichtung nach Anspruch 8, dadurch gekennzeichnet, daß das Volumen (Vk) des Verbindungskanals (39) innerhalb eines bestimmten Bereiches stufenlos veränderbar ist.

11. Vorrichtung nach Anspruch 10, dadurch gekennzeichnet, daß die Position der von den Mitteln (24) zum Entleeren des Speicherraumes (28) ausgeführten Hübe zum Füllen und Entleeren des Speicherraumes (28) relativ zur Austrittsöffnung (20) so gewählt ist, daß das Volumen (Vk) des Verbindungskanals (39) den Bedingungen des Anspruches 9 genügt.

12. Vorrichtung nach Anspruch 11, dadurch gekennzeichnet, daß die Mittel zum Entleeren des Speicherraumes (28) als wenigstens ein Ringkolben (24) ausgebildet sind.

## Claims

1. A process for the production of hollow bodies (57) from thermoplastic material, the wall of which comprises a laminate having at least two layers, by means of extrusion blow moulding, in which process firstly preforms (42) whose wall has a corresponding number of layers are produced in a batch-wise manner using an extrusion unit which has at least two continuously operating extruders and a common extrusion head (10), wherein the extrusion unit is provided with a storage chamber (28) for storage of materials plasticised in the extruders and with means (24) which are reciprocatable with a stroke movement between two limit positions (24a, 24b) for emptying the storage chamber (28) to form a preform, and flows of material, the number of which corresponds to the number of the layers in the wall of the hollow body (57), are brought together in the region of the extrusion head (10) in such a way that mutually adjacent flows of material are joined together in a laminate-formation region to form a laminate for the wall of the preform (42), which laminate is advanced through a communicating duct (39) within the extrusion head (10) to the outlet opening (20) which is at a spacing from the storage chamber (28), and an overall volume portion (Vp) of the laminate is ejected from the outlet opening (20) to form the preform, which has two volume end portions (Vb, Vc) and a volume central portion (Va), wherein at least a part of the central portion (Va) is expanded within the mould cavity (48) of a divided blow moulding mould (47) under an internal increased pressure and the end portions (Vb, Vc) of the overall portion Vp are squeezed off as excess material (51, 52) by a squeezing-off operation in which parts (47a, 47b) of the blow moulding mould are involved, and the excess material (51, 52) remains outside the mould cavity (48), characterised in that the laminate after being formed is stored in the storage chamber and the volume (Vk) of the communicating duct (39) between the laminate-formation region and the outlet opening (20), at the time at which the means (24) for emptying the storage chamber (28) occupy their position (24b) at the end of the emptying stroke movement, is of such a size that, with a predetermined volume in respect of the overall portion (Vp) forming a preform (42), the material for the production of a hollow body, after leaving the storage chamber (28), still remains in the extrusion head (10) for the duration of at least one working cycle, and a volume portion (Vv) of at least partially disturbed laminate which occurs at the end of the emptying stroke movement and/or at the beginning of the filling stroke movement and at the beginning of the emptying stroke movement of the means (24) for emptying the storage chamber (28) adjacent the laminate-formation region inclusive of the material which is extruded into the extrusion head (10) during the emptying stroke movement is disposed in at least one of the volume end portions (Vb, Vc) which are squeezed off the overall portion (Vp) forming the extruded preform (42) and which remain outside the mould cavity of the blow molding mould (47) when at least a part of the central portion (Va) is expanded in the mould cavity (48) of the blow moulding mould (47).

2. A process according to claim 1 characterised in that the volume (Vk) of the communicating duct (39) between the laminate-formation region and the outlet opening (20), at the time at which the means (24) for emptying the storage chamber (28) occupy their position (24b) at the end of the emptying stroke movement:

   a) is not less than the sum of the volume formed by the central portion (Va) and the end portion (Vc) which leads in the direction of flow of the material and the portion (Ve) which is conveyed into the extrusion head (10) during the emptying stroke movement from the extruders, and

   b) is not greater than the sum of the volume formed by the overall portion (Vp) forming a preform and the end portion (Vc) which leads in the direction of flow of the material, less the sub-portion (Vve) of disturbed laminate which occurs at the beginning of the filling stroke movement, wherein

   c) the sum of the volumes of the portion (Ve) which is conveyed into the extrusion head from the extruders during the emptying stroke movement and the sub-portion of disturbed laminate which occurs at the beginning of the filling stroke movement is not greater than the sum of the volumes of both end portions (Vb, Vc) of the overall portion (Vp) of a preform.

3. A process according to claim 2 characterised in that the volume (Vk) of the communicating duct (39) between the laminate-formation region and the outlet opening (20) at the time at which the means (24) for emptying the storage chamber (28) occupy their position (24b) at the end of the emptying stroke movement is of such a size that it is equal to the volume (Vp) of a preform.

4. A process according to claim 2 or claim 3 characterised in that the volume (Vk) of the communicating duct (39) between the laminate-formation region and the outlet opening (20), at the time at which the means (24) for emptying the storage chamber (28) occupy their position (24b) at the end of the emptying stroke movement, is of such a size that it complies with the conditions in accordance with features a) and b) of claim 2 plus the volume of a volume overall portion (Vp) or an integral multiple of the latter.

5. A process according to claim 1 characterised in that the portion by volume of at least partially disturbed laminate is distributed to two adjacent end portions Vb, Vc of two successive preforms (42).

6. A process according to claim 1 characterised in that the materials for the layers (40a, 40b, 40c) forming the laminate (40) flow through the means (24) for emptying the storage chamber (28) into the storage chamber (28) and the laminate-formation region is reciprocated during the filling stroke movement and during the emptying stroke movement within the extrusion head (10) in accordance with the movements of the means (24) for emptying the storage chamber (28).

7. A process according to claim 1 characterised in that the laminate-formation region is stationary.

8. Apparatus for the production of hollow bodies (57) of thermoplastic material, the wall of which comprises a laminate having at least two layers, by means of extrusion blow moulding, comprising an extrusion unit which has at least two extruders and a common extrusion head (10) with an annular outlet opening (20), wherein the extrusion unit is provided with a storage chamber (28) for storage of the material plasticised in the extruders and means (24) reciprocatable with a stroke movement between two limit positions (24a, 24b) for emptying the storage chamber (28) for forming a preform (42), and the apparatus has at least one divided blow moulding mould (47) provided with squeezing-off edges (49a, 49b; 50a, 50b), with at least one mould cavity (48) within which at least one part of the central portion (Va) of the preform (42) is expanded under internal increased pressure to provide the hollow body (57) and a respective end portion (Vb, Vc) is squeezed off as waste material (51, 53) at each of the two ends of the central portion (Va) and provided within the extrusion head (10) is at least one laminate-formation region in which the flows of material for the individual layers (40a, 40b, 40c) are joined together to form the laminate (40) and the laminate-formation region is connected to the outlet opening (20) by way of a communicating duct (39) through which the laminate flows towards the outlet opening (20), characterised in that the volume (Vk) of the communicating duct (39) between the formation region for the laminate which after its formation is stored in the storage chamber and the outlet opening (20) at the moment at which the means (24) for emptying the storage chamber (28) occupy their position (24b) at the end of the emptying stroke movement is of such a size that with a predetermined volume in respect of the volume overall portion (Vp) for forming a preform the material for the production of a hollow body after leaving the storage chamber (28) still remains in the extrusion head (20) for the duration of at least one working cycle and a volume portion (Vv) of at least partially disturbed laminate which occurs at the end of the emptying stroke movement and/or at the beginning of the filling stroke movement and at the beginning of the emptying stroke movement of the means (24) for emptying the storage chamber (28) adjacent the laminate-formation region inclusive of the material which is extruded into the extrusion head (10) during the emptying stroke movement is disposed in at least one of the volume end portions (Vb, Vc) which are squeezed off the overall portion (Vb) forming the extruded preform (42) and remains outside the mould cavity of the blow moulding mould (47) when at least a part of the central portion (Va) is expanded in the mould cavity (48) of the blow moulding mould (47).

9. Apparatus according to claim 8 characterised in that the volume (Vk) of the communicating duct (39) between the laminate-formation region and the outlet opening (20) at the moment at which the means (24) for emptying the storage chamber (28) occupy their position at the end of the emptying stroke movement satisfy the following conditions:

$$Vk \bullet n . Vp - Vb + Ve \text{ and}$$
$$Vk \, \mu \, n . Vp + Vc - Vve,$$

wherein

n is 1 or an integral multiple of 1,
Vp represents the volume overall portion forming the preform,
Vb represents the volume end portion to be squeezed off, which trails in the direction of flow of the laminate,
Vc represents the volume end portion to be squeezed off, which leads in the direction of flow of the laminate,
Ve represents the volume proportion which, during emptying of the storage chamber, with the extruders operating continuously, is conveyed by same into the extrusion head, and
Vve represents the volume portion of disturbed laminate, which trails in the direction of flow of the laminate and which is formed after the beginning of the filling stroke movement,
with the additional condition that:

$$Vv = Ve + Vve \, \mu \, Vb + Vc.$$

10. Apparatus according to claim 8 characterised in that the volume (Vk) of the communicating duct (39) is steplessly variable within a given range.

11. Apparatus according to claim 10 characterised in that the position of the stroke movements performed by the means (24) for emptying the storage chamber (28), for filling and emptying of the storage chamber (28), relative to the outlet opening (20), is so selected that the volume (Vk) of the communicating duct (39) satisfies the conditions of claim 9.

**12.** Apparatus according to claim 11 characterised in that the means for emptying the storage chamber (28) are in the form of at least one annular piston (24).

## Revendications

**1.** Procédé pour fabriquer en matière thermoplastique des corps creux (57) ayant une paroi formée d'au moins trois couches de matière lamifiée, en opérant par extrusion-moulage, pour réaliser d'abord des ébauches de moulage (42) dont la paroi comporte un nombre correspondant de couches, en débitant ces ébauches coup par coup au moyen d'une unité d'extrusion comportant au moins deux extrudeuses en fonctionnement continu et une tête d'extrusion commune (10), cette tête d'extrusion étant pourvue d'une chambre d'accumulation (28) pour garder en attente les matières plastifiées dans les extrudeuses, et d'organes mobiles (24) suivant une course de va-et-vient entre deux positions de bout de course (24a, 24b) pour vider la chambre d'accumulation (28) afin de réaliser une ébauche (42), des moyens étant prévus pour assurer dans la tête d'extrusion (10) le guidage de courants de matière, dont le nombre correspond à celui des couches de la paroi du corps creux (57), afin d'assurer la réunion des courants de matière adjacents en un endroit prévu pour la formation de la matière lamifiée destinée à constituer la paroi de l'ébauche de moulage (42), cette matière lamifiée étant ensuite poussée vers l'aval dans un canal de liaison (39) ménagé à l'intérieur de la tête d'extrusion (10), jusqu'à l'orifice de sortie (20) disposé à une certaine distance de la chambre d'accumulation (28), une dose complète (Vp) de matière lamifiée, comportant deux segments terminaux (Vb, Vc) et une zone médiane (Va), étant ainsi éjectée hors de l'orifice de sortie (20) pour réaliser l'ébauche de moulage (42), au moins une partie de la zone médiane (Va) de la dose de matière lamifiée venant ainsi prendre place à l'intérieur de la cavité de moulage (48) d'un moule de soufflage (47) pour y subir une expansion sous l'effet d'une surpression interne, et les deux segments terminaux (Vb, Vc) de la dose complète de matière lamifiée étant séparée de l'ébauche en tant qu'appendices de matière en excès (51, 53) par une opération d'écrasement et de sectionnement à laquelle participent les parties (47a, 47b) du moule de soufflage, ces appendices de matière en excès (51, 53) étant restés en dehors de la cavité de moulage (47), le procédé étant caractérisé en ce que la matière lamifiée une fois formée est gardée en attente dans la chambre d'accumulation, et en ce qu'on a prévu la valeur du volume (Vk) du canal de liaison (39), entre l'endroit où se forme la matière lamifiée et l'orifice de sortie (20), au moment où les organes mobiles en va-et-vient (24) servant à vider la chambre d'accumulation (28) atteignent leur position de bout de course (24b) en fin de vidage, pour que ce volume (Vk), pour une valeur donnée du volume (Vp) de la dose complète de matière nécessaire pour réaliser une ébauche de moulage (42), permette à la matière destinée à la fabrication d'un corps creux et qui vient de quitter la chambre d'accumulation (28), de rester encore dans la tête d'extrusion (10) pendant au moins un cycle de travail, et permette une mise en place déterminée d'une zone (Vv) de matière lamifiée au moins partiellement en désordre, qui a été produite, à proximité de l'endroit où se forme la matière lamifiée, à la fin de la course de vidage et/ou au début de la course de remplissage et au début de la course de vidage des organes (24) prévus pour vider la chambre d'accumulation (28), cette zone (Vv) contenant également la matière plastique refoulée dans la tête d'extrusion (10) par les extrudeuses pendant la phase de vidage de la chambre d'accumulation, cette zone (Vv) venant ainsi prendre place dans au moins l'un des segments terminaux (Vb, Vc) de la dose complète de matière (Vp) qui constitue l'ébauche de moulage extrudée (42), ces segments terminaux (Vb, Vc) étant destinés à être ensuite sectionnés et éliminés, et restant en dehors de la cavité de moulage du moule de soufflage (47), alors qu'au moins une partie de la zone médiane de matière (Va) de l'ébauche subit un traitement d'expansion dans la cavité de moulage (48) du moule de soufflage (47).

**2.** Procédé selon la revendication 1, caractérisé en ce que le volume (Vk) du canal de liaison (39), entre l'endroit où se forme la matière lamifiée et l'orifice de sortie (20), à l'instant où les organes (24) prévus pour vider la chambre d'accumulation (28) atteignent leur position de bout de course (24b) en fin de vidage, satisfait aux conditions ci-après:

    a) il n'est pas inférieur à la somme du volume (Va) de la zone médiane de matière de l'ébauche, et du volume de matière (Vc) du segment terminal antérieur de l'ébauche dans le sens de l'écoulement de la matière, plus le volume (Ve) de la matière qui est refoulée dans la tête d'extrusion (10) par les extrudeuses pendant la course de vidage;

b) et il n'est pas supérieur à la somme du volume (Vp) d'une dose complète de matière prévue pour réaliser une ébauche, et du volume de matière (Vc) du segment terminal antérieur de l'ébauche dans le sens d'écoulement de la matière, déduction faite du volume (Vve) de la tranche de matière lamifiée en désordre produite au début de la course de remplissage;

c) étant entendu en outre, que la somme du volume de matière (Ve) qui est refoulée dans la tête d'extrusion par les extrudeuses pendant la course de vidage, et du volume de la tranche de matière en désordre formée au début de la course de remplissage, n'est pas supérieure à la somme des volumes de matière des deux segments terminaux (Vb, Vc) de la dose complète de matière (Vp) d'une ébauche de moulage.

3. Procédé selon la revendication 2, caractérisé en ce qu'on a prévu la valeur du volume (Vk) du canal de liaison (39), entre l'endroit où se forme la matière lamifiée et l'orifice de sortie (20), à l'instant où les organes (24) servant à vider la chambre d'accumulation (28) atteignent leur position de bout de course (24b) en fin de vidage, pour que ce volume (Vk) soit égal au volume de matière (Vp) d'une ébauche de moulage.

4. Procédé selon l'une des revendications 2 ou 3, caractérisé en ce qu'on a prévu le volume (Vk) du canal de liaison (39), entre l'endroit où se forme la matière lamifiée et l'orifice de sortie (20), à l'instant où les organes (24) prévus pour vider la chambre d'accumulation (28) atteignent leur position de bout de course (24b) en fin de vidage, pour que ce volume réponde aux conditions a) et b) de la revendication 2, en y ajoutant le volume d'une dose complète de matière (Vp) ou d'un multiple entier de cette dose.

5. Procédé selon la revendication 1, caractérisé en ce qu'on répartit la zone de matière lamifiée au moins partiellement en désordre entre deux segments terminaux (Vb, Vc) de deux ébauches successives (42).

6. Procédé selon la revendication 1, caractérisé en ce que les matières servant à réaliser les couches constitutives (40a, 40b, 40c) de la matière lamifiée (40) pénètrent dans la chambre d'accumulation (28) en s'écoulant à travers les organes (24) prévus pour vider cette chambre, et en ce que l'endroit où se forme la matière lamifiée se déplace dans la tête d'extrusion pendant la course de vidage, suivant un mouvement de va-et-vient qui correspond au mouvement des organes (24) servant à vider la chambre d'accumulation (28).

7. Procédé selon la revendication 1, caractérisé en ce que l'endroit où se forme la matière lamifiée a une position stationnaire.

8. Dispositif pour réaliser en matière thermoplastique des corps creux (57) ayant une paroi lamifiée formée d'au moins deux couches, en opérant par extrusion-soufflage au moyen d'une unité d'extrusion comportant au moins deux extrudeuses et une tête d'extrusion commune (10) qui est pourvue d'un orifice annulaire (20), cette unité d'extrusion comportant une chambre d'accumulation (28) pour garder en attente la matière plastifiée dans les extrudeuses, et des organes (24) pouvant être animés d'un mouvement de va-et-vient entre deux positions de bout de course (24a, 24b) pour vider la chambre d'accumulation (28) afin de réaliser une ébauche de moulage (42), et le dispositif comportant en outre un moule de soufflage (47) en plusieurs parties présentant des lèvres d'écrasement et de sectionnement (49a, 49b, 50a, 50b), au moins une partie de la zone médiane (Va) de l'ébauche étant prévue pour venir se placer à l'intérieur du moule (47) pour y subir un traitement d'expansion sous l'effet d'une supression interne, afin de donner naissance au corps creux (57), cette zone médiane (Va) de l'ébauche comportant à ses deux extrémités des segments terminaux (Vb, Vc) destinés à former des appendices en excès (51, 53) à sectionner et à éliminer, au moins un endroit où se forme la matière lamifiée étant prévu à l'intérieur de la tête d'extrusion (10), pour assurer la réunion des courants de matière constituant les différentes couches (40a, 40b, 40c) de la matière lamifiée (40) ainsi formée, et l'endroit où se forme la matière lamifiée étant relié à l'orifice de sortie (20) par un canal de liaison (39) où s'écoule la matière lamifiée en direction de l'orifice de sortie (20), le dispositif étant caractérisé en ce que le canal de liaison (39) présente un volume déterminé (Vk), entre l'endroit où se forme la matière lamifiée conservée ensuite en attente dans la chambre d'accumulation, et l'orifice de sortie (20), à l'instant où les organes (24) servant à vider la chambre d'accumulation atteignent leur position de bout de course (24b) en fin de vidage, le volume (Vk) étant tel que, pour une valeur donnée du volume (Vp) de la dose complète de matière prévue pour réaliser une ébauche de moulage (42) afin de fabriquer un corps creux, cette dose de matière reste encore dans la tête d'extrusion (10) pendant la durée d'au moins un cycle de travail, et le volume (Vk) étant tel qu'on assure ainsi une mise en place déterminée d'une zone de matière (Vv) au moins partiellement en désordre qui apparaît au voisinnage de l'endroit où se forme la matière lamifiée, à la fin de la course de vidage et/ou au début de la course de remplissage et au début de la course de vidage des organes (24) servant à vider la chambre d'accumulation (28), cette zone de matière (Vv) comprenant en outre la matière refoulée dans la tête d'extrusion (10) par les extrudeuses pendant la course de vidage, cette zone de matière (Vv) se trouvant ainsi mise en place dans au moins l'un des segments terminaux (Vb, Vc) destinés à être séparés de l'ébauche extrudée (42) et restant à cet effet hors de la cavité de moulage du moule de soufflage (47), alors qu'au moins une partie de la zone médiane (Va) de l'ébauche va subir un traitement d'expansion dans la cavité de moulage (48) du moule de soufflage (47).

9. Dispositif selon la revendication 8, caractérisé en ce que le volume (Vk) du canal de liaison (39), entre l'endroit où se forme la matière lamifiée et l'orifice de sortie (20), à l'instant où les organes (24) servant à vider la chambre d'accumulation (28) atteignent leur position de bout de course en fin de vidage, satisfait aux conditions définies par les relations suivantes:

Vk supérieur ou égal à: n . Vp - Vb + Ve, et

Vk inférieur ou égal à: n . Vp + Vc - Vve, dans lesquelles:

n = 1, ou est un multiple entier de 1,

Vp étant la valeur du volume de la dose complète de matière pour réaliser une ébauche de moulage,

Vb la valeur du volume de matière du segment terminal postérieur de l'ébauche, dans le sens d'écoulement de la matière lamifiée,

Vc la valeur du volume de matière du segment terminal antérieur de l'ébauche, dans le sens d'écoulement de la matière lamifiée,

Ve le volume de matière refoulé dans la tête d'extrusion pendant le vidage de la chambre d'accumulation, par les extrudeuses en fonctionnement continu,

Vve le volume de la tranche postérieure de matière lamifiée en désordre, dans le sens d'écoulement de la matière, cette tranche de matière lamifiée en désordre, apparaissant après le début de la course de remplissage,

étant entendu que, par ailleurs, le système considéré répond à la double condition définie par la relation suivante:

Vv = Ve + Vve inférieur ou égal à: Vb + Vc.

10. Dispositif selon la revendication 8, caractérisé en ce qu'on peut faire varier le volume (Vk) du canal de liaison (39) d'une manière continue, dans une plage determinée.

11. Dispositif selon la revendication 10, caractérisé en ce qu'on choisit, par rapport à l'orifice de sortie (20), la position de la plage de va-et-vient des organes (24) prévus pour vider la chambre d'accumulation (28), afin de vider et de remplir cette chambre (28), de telle manière que le volume (Vk) du canal de liaison (39) réponde aux conditions définies dans la revendication 9.

12. Dispositif selon la revendication 11, caractérisé en ce que les organes prévus pour vider la chambre d'accumulation (28) sont constitués par au moins un piston annulaire (24).

FIG.1

FIG.2

FIG. 3

FIG.4a FIG.4b FIG.4c FIG.4d

FIG.5

FIG.6a

FIG.6b

FIG.7a   FIG.7b   FIG.7c   FIG.7d

FIG.8

FIG.9a

FIG.9b

FIG.10

FIG.11